# EUROPEAN PATENT APPLICATION

(11) **EP 4 625 250 A1**
(43) Date of publication of application: **01.10.2025**
(21) Application number: 25154484.7
(22) Date of filing: 28.01.2025
(51) Int. Cl.: G06N 3/045, G06N 3/044, G06N 3/047, G06N 3/096

(54) **CONDENSED GRAPH DISTRIBUTION (CGD)-BASED GRAPH CONTINUAL LEARNING**

(30) Priority: 28.03.2024 IN 202411025236
(71) Applicant: FUJITSU LIMITED, Kawasaki-shi, Kanagawa 211-8588 (JP)
(72) Inventor: NANDY, Jay, 560037 Bangalore (IN); MONDAL, Arnab Kumar, 560037 Bangalore (IN)
(74) Representative: Haseltine Lake Kempner LLP

(57) **Abstract**

In an embodiment, operations include receiving a first graph associated with a first task following graph learning tasks including a sequence of second graphs. A set of sample graphs is selected from a set of condensed graph distributions (CGDs) associated with the graph learning tasks. A set of statistics associated with the set of CGDs is updated, based on one or more auxiliary graph neural network (GNN) models, the first graph, and the set of sample graphs. A first CGD associated with the first task is learned. A plurality of sample graphs is re-selected from the first CGD and the set of CGDs. A first loss corresponding to a prediction error associated with a downstream prediction task of the primary GNN model is determined. A prediction result associated with the downstream prediction task is generated by the primary GNN model, based on the first loss.

## Description

### FIELD

The embodiments discussed in the present disclosure are related to condensed graph distribution (CGD)-based graph continual learning.

### BACKGROUND

Advancements in the field of artificial intelligence (AI) have led to development of machine learning techniques that may be applied on graph data. Examples of data that may be represented using graphs may include social network data, e-commerce data, financial transactions data, genome sequencing data, chemical compound data, and the like. The graphs that represent such data may be analyzed to derive predictions using various Graph AI models. In certain application areas, time-evolving graphs may be received for prediction by the Graph AI models. Typically, in case predictive models are applied on such time evolving graphs, the previous graphs may be stored and/or processed with the new incoming training samples to avoid performance degradation. However, in such a scenario, a large memory storage may be required, which may make the process expensive to implement. In certain other scenarios, a regularizer may be used to restrict updates of weights associated with the Graph AI model during training of the Graph AI model. In such a scenario, there may be a catastrophic forgetting of previous patterns and poor performance may be observed on previous prediction tasks. Further, when model growing techniques are applied on the graph data, a linear growth of model parameters may occur as the number of tasks associated with the time evolving graphs increases, thereby making the technique difficult to scale.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations, which may include receiving a first graph associated with a first task following incoming graph learning tasks including a sequence of second graphs. The set of operations may further include selecting a set of sample graphs from a set of condensed graph distributions (CGDs) associated with the incoming graph learning tasks. The set of operations may further include updating a set of statistics associated with the set of CGDs, based on one or more auxiliary graph neural network (GNN) models, the first graph, and the set of sample graphs. The set of operations may further include learning a first CGD associated with the first task, based on the update of the set of statistics. The set of operations may further include re-selecting a plurality of sample graphs from the first CGD and the set of CGDs. The set of operations may further include determining a first loss based on the first graph, the plurality of sample graphs, and a primary GNN model. The first loss may correspond to a prediction error associated with a downstream prediction task of the primary GNN model. The primary GNN model may be configured to generate a prediction result for the downstream prediction task, based on the first loss. The set of operations may further include controlling rendering of first information including the prediction result associated with the downstream prediction task, based on the primary GNN model.

The objects and advantages of the embodiments will be realized and achieved at least by the elements, features, and combinations particularly pointed out in the claims.

Both the foregoing general description and the following detailed description are given as examples and are explanatory and are not restrictive of the disclosure, as claimed.

### BRIEF DESCRIPTION OF THE DRAWINGS

Example embodiments will be described and explained with additional specificity and detail through the use of the accompanying drawings in which:
FIG. 1 is a diagram representing an example network environment related to condensed graph distribution (CGD)-based graph continual learning;
FIG. 2 is a block diagram that illustrates an exemplary electronic device for condensed graph distribution (CGD)-based graph continual learning;
FIG. 3 is a diagram that illustrates an exemplary execution pipeline for training of a primary graph neural network (GNN) model for downstream prediction tasks associated with graph continual learning;
FIG. 4A is a diagram that illustrates exemplary execution pipeline for determination of an inference (e.g., a node label inference) from a primary graph neural network (GNN) model in a task-incremental setting;
FIG. 4B is a diagram that illustrates exemplary execution pipeline for determination of an inference (e.g., a node label inference) from a primary graph neural network (GNN) model in a one of a domain-incremental setting or a class-incremental setting;
FIG. 5A is a diagram that illustrates an exemplary scenario for determination of a second loss between an input time-evolving graph and graphs sampled from condensed graph distributions (CGDs);
FIG. 5B is a diagram that illustrates an exemplary scenario for determination of determination of a task-specific prediction based on training of a graph neural network (GNN) model for a task;
FIG. 6A is a diagram that illustrates exemplary scenario for determination of an inference (e.g., a node label inference) from a primary graph neural network (GNN) model in a task-incremental setting;
FIG. 6B is a diagram that illustrates exemplary scenario for determination of an inference (e.g., a node label inference) from a primary graph neural network (GNN) model in a one of a domain-incremental setting or a class-incremental setting;
FIG. 7 is a diagram that illustrates a flowchart of an example method for creation of a condensed graph distribution (CGD) of an new incoming graph;
FIG. 8 is a diagram that illustrates a flowchart of an example method for Graph Neural Network (GNN) update;
FIG. 9 is a diagram that illustrates a flowchart of an example method for determination of an inference (e.g., a node label inference) from a primary graph neural network (GNN) model in a task-incremental setting;
FIG. 10 is a diagram that illustrates a flowchart of an example method for determination of an inference (e.g., a node label inference) from a primary graph neural network (GNN) model in a domain-incremental setting or a class-incremental setting;
FIG. 11 is a diagram that illustrates an exemplary scenario of malicious activity detection in a social network, using the electronic device of FIG. 1;
FIG. 12 is a diagram that illustrates an exemplary scenario of implementation of a recommendation system, using the electronic device of FIG. 1; and
FIG. 13 is a diagram that illustrates a flowchart of an example method for condensed graph distribution (CGD)-based graph continual learning;
all according to at least one embodiment described in the present disclosure.

### DESCRIPTION OF EMBODIMENTS

Some embodiments described in the present disclosure relate to methods and systems for condensed graph distribution (CGD)-based graph continual learning. According to one or more embodiments of the present disclosure, the technological field of graph continual learning may be improved by configuring a computing system (for example, an electronic device) in a manner that the computing system may use condensed graph distributions (CGDs) and a stochastic memory buffer for graph continual learning. The computing system may receive a first graph associated with a first task following incoming graph learning tasks including a sequence of second graphs. The computing system may further select a set of sample graphs from a set of CGDs associated with the incoming graph learning tasks. The computing system may further update a set of statistics associated with the set of CGDs, based on one or more auxiliary graph neural network (GNN) models, the first graph, and the set of sample graphs. The computing system may further learn a first CGD associated with the first task, based on the update of the set of statistics. The computing system may further re-select a plurality of sample graphs from the first CGD and the set of CGDs. The computing system may further determine a first loss, based on the first graph, the plurality of sample graphs, and a primary GNN model. The first loss may correspond to a prediction error associated with a downstream prediction task of the primary GNN model. For example, the first loss may be determined based on a squared-error loss associated with an output (e.g., a measure of difference between embeddings of the first graph and embeddings of each of the plurality of sample graphs) of the primary GNN model. The primary GNN model may be configured to generate a prediction result associated with a downstream prediction task, based on the determined first loss. The computing system may further control rendering of first information including the generated prediction result associated with the downstream prediction task, based on the primary GNN model.

Data of various application areas may be represented in the form of graphs. Useful insights and predictions associated with the underlying data may be derived from such graphs. For example, a Graph AI model may be applied on graph data to generate predictions. The graph data in certain application areas, such as, social media networks, may be time-evolving and dynamic. The generation of predictions from such time-evolving graphs may not be a straightforward process. For such time-evolving graphs, one technique may be to employ additional memory to store samples from previous graph learning tasks (i.e., previously received graphs), which may be replayed on arrival of newly received graphs. However, in such a case, a large storage overhead may be required to implement the additional memory. Another typical technique that may be applied on such time-evolving graphs may be using a regularizer to restrict updates of weights of the Graph AI model. The regularizer-based approach may suffer from a catastrophic forgetting problem, where the performance on previous historical tasks may degrade significantly. Other approaches, such as, model growing techniques, may isolate parameters for newly arrived tasks. However, the model growing technique may be difficult to scale as the number of tasks increases.

The disclosed computing system may use condensed graph distributions (CGDs) and a stochastic memory buffer for graph continual learning. According to the disclosure, for each new graph associated with a certain task, the primary GNN model may be trained to learn the particular task along with replay of historical tasks using samples drawn from a stored memory of condensed graph distributions. For test samples, the prediction may be obtained based on selective sampling from the CGDs to finetune the primary GNN model for task incremental settings and using majority voting technique for class incremental settings. The disclosed computing system may require a reduced storage overhead based on an optimization of the storage memory (e.g., a memory buffer) to achieve better scalability. Further, selective sampling from the optimized memory buffer corresponding to given test sample(s) may improve the overall predictive performance on previous tasks. Thus, a scalable graph continual learning technique with improved predictive performance and reduced memory size is disclosed.

Embodiments of the present disclosure are explained with reference to the accompanying drawings.

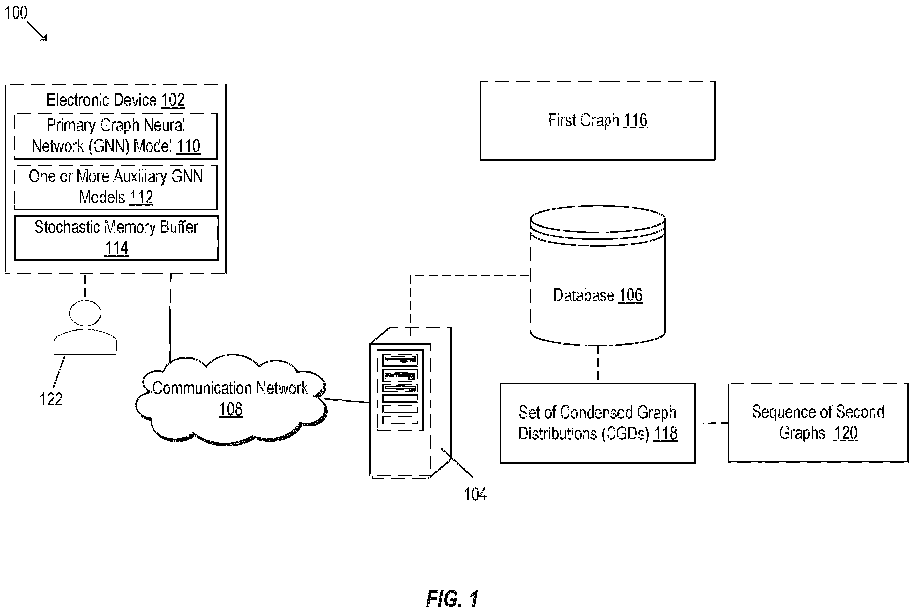

FIG. 1 is a diagram representing an example network environment related to condensed graph distribution (CGD)-based graph continual learning, according to at least one embodiment described in the present disclosure. With reference to FIG. 1, there is shown a network environment 100. The network environment 100 may include an electronic device 102 and a server 104 (that may host a database 106). The electronic device 102 and the server 104 may be communicatively coupled to each other, via a communication network (such as, the communication network 108). The electronic device 102 may include a primary Graph Neural Network (GNN) model 110, one or more auxiliary GNN models 112, and a stochastic memory buffer 114. The database 106 may store a first graph 116 and a set of CGDs 118 associated with a sequence of second graphs 120. In FIG. 1, there is also shown a user 122 who may be associated with or may operate the electronic device 102.

The electronic device 102 may include suitable logic, circuitry, interfaces, and/or code that may be configured to receive the first graph 116 associated with a first task following incoming graph learning tasks including the sequence of second graphs 120. The electronic device 102 may be further configured to select a set of sample graphs from a set of condensed graph distributions (CGDs) 118 associated with the incoming graph learning tasks. The electronic device 102 may be further configured to update a set of statistics associated with the set of CGDs 118, based on the one or more auxiliary graph neural network (GNN) models 112, the first graph 116, and the set of sample graphs. The electronic device 102 may be further configured to learn a first CGD associated with the first task, based on the update of the set of statistics. The electronic device 102 may be further configured to re-select a plurality of sample graphs from the first CGD and the set of CGDs 118. The electronic device 102 may be further configured to determine a first loss, based on the first graph 116, the plurality of sample graphs, and the primary GNN model 110. The first loss may correspond to a prediction error associated with a downstream prediction task of the primary GNN model. For example, the first loss may be determined based on a squared-error loss associated with an output (e.g., a measure of difference between embeddings of the first graph 116 and embeddings of each of the plurality of sample graphs) of the primary GNN model 110. The primary GNN model 110 may be configured to generate a prediction result for the downstream prediction task, based on the first loss. The electronic device 102 may be further configured to control rendering of first information including the prediction result associated with the downstream prediction task, based on the primary GNN model 110. Examples of the electronic device 102 may include, but may not be limited to, a computing device, a smartphone, a mainframe machine, a server, a consumer electronic (CE) device, a computer workstation, and/or a device with a graph-processing capability (such as, a device with a set of graphic processor units (GPU)).

The server 104 may include suitable logic, circuitry, and interfaces, and/or code that may be configured to receive requests from the electronic device 102 for retrieval of a dataset including incoming graphs (e.g., the first graph 116) of tasks and/or data (e.g., the set of CGDs 118) related to historical graphs of tasks. The server 104 may be further configured to retrieve the dataset from the database 106 and transmit the retrieved dataset to the electronic device 102.

In at least one embodiment, the server 104 may store one or more neural network models (e.g., the primary GNN model 110 and/or the one or more auxiliary GNN models 112) and apply the one or more neural network models on the dataset (e.g., the incoming graphs and/or the data related to the historical graphs of tasks) to determine an output such as, a first CGD of the first graph 116 (and/or a prediction result associated with a prediction task). Thereafter, the server 104 may transmit the determined output (e.g., the first CGD and/or the prediction result associated with the prediction task) to the electronic device 102.

In some embodiments, the server 104 may be configured to receive the first CGD associated with the first task corresponding to the first task, from the electronic device 102. In such scenario, the server 104 may be configured to re-select a plurality of sample graphs from the first CGD and the set of CGD 118. The server 104 may be configured to determine the first loss of the primary GNN model 110, based on the first graph 116 and the re-selection of the plurality of sample graphs. Thereafter, the server 104 may determine the first information including a prediction result associated with a downstream prediction task, based on the primary GNN model 110, and transmit the first information to the electronic device 102, for display by the electronic device 102.

The server 104 may be implemented as a cloud server and may execute operations through web applications, cloud applications, hypertext transport protocol (HTTP) requests, repository operations, file transfer, and the like. Other example implementations of the server 104 may include, but are not limited to, a database server, a file server, a web server, a media server, an application server, a mainframe server, a cloud computing server, and/or any device with a graph-processing capability (such as, a device with a set of graphic processor units (GPU)).

In at least one embodiment, the server 104 may be implemented as a plurality of distributed cloud-based resources by use of several technologies that may be well known to those of ordinary skill in the art. A person with ordinary skill in the art will understand that the scope of the disclosure may not be limited to the implementation of the server 104 and the electronic device 102 as two separate entities. In certain embodiments, the functionalities of the server 104 can be incorporated in its entirety or at least partially in the electronic device 102, without a departure from the scope of the disclosure.

The database 106 may include suitable logic, circuitry, interfaces, and/or code that may be configured to store a set of graphs and information related to data distribution in the set of graphs. For example, the database 106 may store the first graph 116 (which may be a current incoming graph) and the set of CGDs 118 associated with the sequence of second graphs 120. The sequence of second graphs 120 may correspond to historical graphs that may be received prior to the first graph 116 in a timeline of tasks associated with the set of graphs. The database 106 may be derived from data off a relational or non-relational database, or a set of comma-separated values (csv) files in a conventional storage or a big-data storage. The database 106 may be stored or cached on a device, such as, the server 104 or the electronic device 102. The device storing the database 106 may be configured to receive a query for the first graph 116 and/or the set of CGDs 118. In response, the device storing the database 106 may be configured to retrieve and transmit the first graph 116 and/or the set of CGDs 118 to the electronic device 102.

In accordance with an embodiment, the database 106 may be hosted on a plurality of servers stored at same or different locations. The operations of the database 106 may be executed using hardware including a processor, a microprocessor (for example, to perform or control performance of one or more operations), a field-programmable gate array (FPGA), or an application-specific integrated circuit (ASIC). In some other instances, the database 106 may be implemented using software.

A person with ordinary skill in the art will understand that the scope of the disclosure may not be limited to the implementation of the database 106 and the server 104 (or the electronic device 102) as two separate entities. In certain embodiments, the functionalities of the database 106 can be incorporated in its entirety or at least partially in the server 104 (or the electronic device 102), without a departure from the scope of the disclosure.

The communication network 108 may include a communication medium via which the electronic device 102 and the server 104 may communicate with each other. The communication network 108 may be one of a wired connection or a wireless connection. Examples of the communication network 108 may include, but are not limited to, the Internet, a cloud network, a Cellular or Wireless Mobile Network (such as, Long-Term Evolution and 5G New Radio), a satellite network (such as, a network of a set of low-earth orbit satellites), a Wireless Fidelity (Wi-Fi) network, a Personal Area Network (PAN), a Local Area Network (LAN), or a Metropolitan Area Network (MAN). Various devices in the network environment 100 may be configured to connect to the communication network 108 in accordance with various wired and wireless communication protocols. Examples of the wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols.

In accordance with an embodiment, each of the primary GNN model 110 and the one or more auxiliary GNN models 112 may correspond to a GNN model including suitable logic, circuitry, interfaces, and/or code configured to classify or analyze input graph data to generate an output result for a particular real-time application or task. For example, a trained GNN model may recognize different nodes in the input graph data, and edges between each node in the input graph data. The edges may correspond to different connections or relationships between each node in the input graph data. Based on the recognized nodes and edges, the trained GNN model may classify different nodes within the input graph data, into different labels or classes. In an example, a particular node of the input graph data may include a set of features associated therewith. For example, for a social network graph with users as nodes and connections as edges, the set of features may include, but are not limited to, a set of social connections or a user, a degree of connection between users, common interests/preferences, or users, and the like. Further, each edge may connect with different nodes having a similar set of features. The GNN model may be applied on an input graph to encode the set of features to generate a feature vector. After the encoding, information may be passed between the particular node and the neighboring nodes connected through the edges. Based on the information passed to the neighboring nodes, a final vector may be generated for each node. Such final vector may include information associated with the set of features for the particular node as well as the neighboring nodes, thereby providing reliable and accurate information associated with the particular node. As a result, the GNN model may analyze the information represented as the input graph data. The GNN model may be implemented using hardware including a processor, a microprocessor (e.g., to perform or control performance of one or more operations), a field-programmable gate array (FPGA), or an application-specific integrated circuit (ASIC). In some other instances, the GNN model may be a code, a program, or set of software instructions. The GNN model may be implemented using a combination of hardware and software.

In some embodiments, the GNN model may correspond to multiple classification layers for classification of different nodes in the input graph data, where each successive layer may use an output of a previous layer as input. Each classification layer may be associated with a plurality of edges, each of which may be further associated with plurality of weights. During training, the GNN model may be configured to filter or remove the edges or the nodes based on the input graph data and further provide an output result (i.e. a graph representation) of the GNN model. Examples of the GNN model may include, but are not limited to, a graph convolution network (GCN), a Graph Spatial-Temporal Networks with GCN, a recurrent neural network (RNN), a deep Bayesian neural network, and/or a combination of such networks.

The stochastic memory buffer 114 may correspond to a suitable logic, circuitry, interfaces, and/or code that may be configured to store graph data including condensed graph distributions of incoming graphs for graph continual learning. For example, the stochastic memory buffer 114 may be configured to store the first CGD and the set of CGDs 118. The electronic device 102 may re-select the plurality of sample graphs from the graph data (e.g., the first CGD and the set of CGDs 118) stored in the stochastic memory buffer 114. The storage of the graph data in the stochastic memory buffer 114 may be based on a stochastic process associated with random probability distributions associated with incoming graphs (e.g., the first graph 116 and the sequence of second graphs 120). The stochastic memory buffer 114 may be implemented as a temporary memory area in which data may be stored in a main memory (e.g., a Random Access Memory (RAM)) or a disk to facilitate transfer of data between input and output systems with varied memory access times.

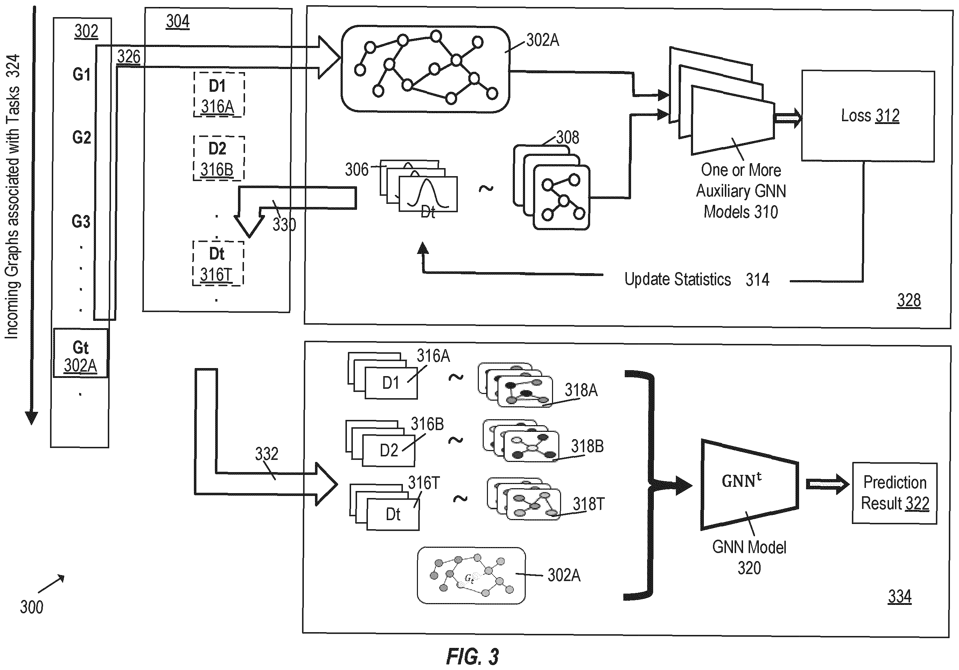

In operation, the electronic device 102 may be configured to receive the first graph 116 associated with a firsttask following incoming graph learning tasks including the sequence of second graphs 120. The electronic device 102 may transmit a request for the first graph 116 to the server 104. The server 104 may retrieve the first graph 116 from the database 106 and transmit the retrieved first graph 116 to the electronic device 102. The reception of the first graph is described further, for example, with reference to FIG. 3.

The electronic device 102 may be configured to select a set of sample graphs from the set of CGDs 118 associated with the incoming graph learning tasks. The electronic device 102 may determine whether each CGD of the set of CGDs 118 is available in the stochastic memory buffer 114 in the electronic device 102. In case each CGD of the set of CGDs 118 is available in the stochastic memory buffer 114, the electronic device 102 may retrieve the set of CGDs 118 from the stochastic memory buffer 114. However, in case one or more CGDs of the set of CGDs 118 are not available in the stochastic memory buffer 114, the electronic device 102 may transmit a request for the one or more CGDs to the server 104. The server 104 may retrieve the one or more CGDs from the database 106 and transmit the retrieved one or more CGDs to the electronic device 102. Once each CGD of the set of CGDs 118 is retrieved/received, the electronic device 102 may select the set of sample graphs from the set of CGDs 118. The selection of the set of sample graphs is described further, for example, with reference to FIG. 3.

The electronic device 102 may be configured to update a set of statistics associated with the set of CGDs 118, based on the one or more auxiliary GNN models 112, the first graph 116, and the set of sample graphs. The electronic device 102 may apply the one or more auxiliary GNN models 112 on the first graph 116 and each graph of the set of sample graphs. Based on the application of the one or more auxiliary GNN models 112, the electronic device 102 may update the set of statistics associated with the set of CGDs 118. The update of the set of statistics is described further, for example, with reference to FIG. 3.

The electronic device 102 may be configured to learn the first CGD associated with the first task, based on the update of the set of statistics. For example, based on the update of the statistics of the set of CGDs 118, the electronic device 102 may estimate parameters of a distribution associated with the first graph 116. The learning of the first CGD is described further, for example, with reference to FIG. 3.

The electronic device 102 may be configured to re-select a plurality of sample graphs from the first CGD and the set of CGDs 118. To re-select the plurality of sample graphs, the electronic device 102 may randomly sample a predetermined number of graphs from the first CGD and the set of CGDs 118. The predetermined number of graphs may be sampled from the stochastic memory buffer 114. The re-selection of the plurality of sample graphs is described further, for example, with reference to FIG. 3.

The electronic device 102 may be configured to determine a first loss associated with the primary GNN model 110, based on the first graph 116 and the re-selection of the plurality of sample graphs. The first loss may correspond to a loss associated with a downstream prediction task on which the primary GNN model 110 may be applied. For example, the first loss may be determined based on a squared-error loss associated with an output (e.g., a measure of difference between embeddings of the first graph 116 and embeddings of each of the plurality of sample graphs) of the primary GNN model 110. The primary GNN model 110 may be configured to generate a prediction result associated with a prediction task (e.g., the downstream prediction task), based on the determined first loss. The determination of the first loss is described further, for example, with reference to FIG. 3.

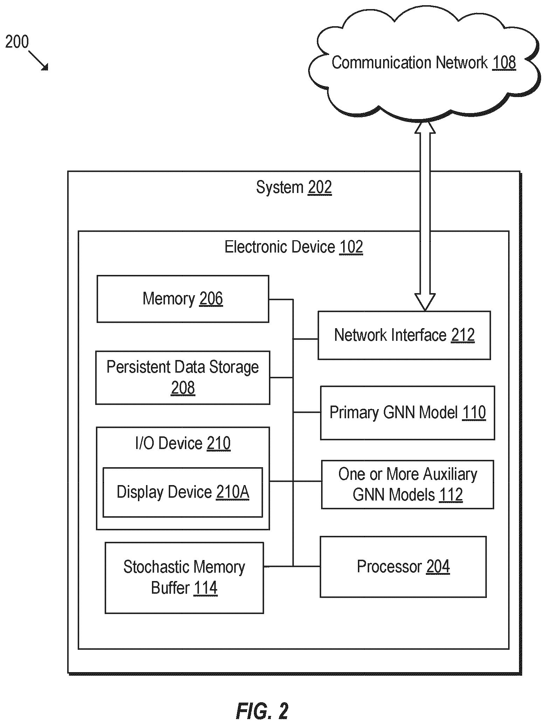

The electronic device 102 may be configured to control rendering of first information including the prediction result associated with the downstream prediction task, based on the primary GNN model 110. The electronic device 102 may receive an input graph associated with the downstream prediction task. The electronic device 102 may apply the primary GNN model 110 on the received input graph to determine a prediction result for the downstream prediction task. The electronic device 102 may generate the first information based on the determined prediction result. The electronic device 102 may render the first information on a display device (e.g., a display device 210A of FIG. 2) associated with the electronic device 102.

Modifications, additions, or omissions may be made to FIG. 1 without departing from the scope of the disclosure. For example, the network environment 100 may include more or fewer elements than those illustrated and described in the present disclosure. In some embodiments, the functionality of each of the server 104 and the database 106, may be incorporated into the electronic device 102, without a deviation from the scope of the disclosure.

FIG. 2 is a block diagram that illustrates an exemplary electronic device for condensed graph distribution (CGD)-based graph continual learning, in accordance with at least one embodiment described in the present disclosure. FIG. 2 is explained in conjunction with elements from FIG. 1. With reference to FIG. 2, there is shown a block diagram 200 of a system 202 that includes the electronic device 102. The electronic device 102 may include a processor 204, a memory 206, a persistent data storage 208, an input/output (I/O) device 210, and a network interface 212. In at least one embodiment, the memory 206 may store the primary GNN model 110 and the one or more auxiliary GNN models 112. Further, the electronic device 102 may include the stochastic memory buffer 114. In at least one embodiment, the I/O device 210 may include a display device 210A.

The processor 204 may include suitable logic, circuitry, and interfaces that may be configured to execute a set of instructions stored in the memory 206. The processor 204 may be configured to execute program instructions associated with different operations to be executed by the electronic device 102. The processor 204 may be configured to receive the first graph 116, select the set of sample graphs, update the set of statistics, learn the first CGD, re-select the plurality of sample graphs, determine the first loss, and control rendering of the first information. The processor 204 may be implemented based on a number of processor technologies known in the art. Examples of the processor technologies may include, but are not limited to, a Central Processing Unit (CPU), X86-based processor, a Reduced Instruction Set Computing (RISC) processor, an Application-Specific Integrated Circuit (ASIC) processor, a Complex Instruction Set Computing (CISC) processor, a Graphical Processing Unit (GPU), a coprocessor, or a combination thereof.

Although illustrated as a single processor in FIG. 2, the processor 204 may include any number of processors configured to, individually or collectively, perform or direct performance of any number of operations of the electronic device 102, as described in the present disclosure. Additionally, one or more of the processors may be present on one or more different electronic devices, such as different servers. In at least one embodiment, the processor 204 may be configured to interpret and/or execute program instructions, or process data that may be stored in the memory 206 and/or the persistent data storage 208. In some embodiments, the processor 204 be configured to may fetch program instructions from the persistent data storage 208 and load the program instructions in the memory 206. After the program instructions are loaded into the memory 206, the processor 204 may execute the program instructions.

The memory 206 may include suitable logic, circuitry, and interfaces that may be configured to store the one or more instructions to be executed by the processor 204. The one or more instructions stored in the memory 206 may be executed by the processor 204 to perform the different operations of the processor 204 (and the electronic device 102). The memory 206 that may store the first graph 116, the set of CGDs 118, the first CGD, and the first information. In an embodiment, the memory 206 may include a Examples of implementation of the memory 206 may include, but are not limited to, a CPU cache, a Hard Disk Drive (HDD), a Solid-State Drive (SSD), Random Access Memory (RAM), Read Only Memory (ROM), Electrically Erasable Programmable Read-Only Memory (EEPROM), and/or a Secure Digital (SD) card.

The persistent data storage 208 may include suitable logic, circuitry, and/or interfaces that may be configured to store program instructions executable by the processor 204. The persistent data storage 208 may include computer-readable storage media for carrying or having computer-executable instructions or data structures stored thereon. Such computer-readable storage media may include any available media that may be accessed by a general-purpose or special-purpose computer, such as the processor 204. By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204 to perform a certain operation or group of operations associated with the electronic device 102.

The I/O device 210 may include suitable logic, circuitry, and interfaces that may be configured to receive inputs and render outputs based on the received inputs. For example, the I/O device 210 may receive an input that may trigger reception of the first graph 116 that includes information associated with a certain application domain, such as, social network information, e-commerce information, financial transaction information, and the like. The I/O device 210 may further receive a user input indicative of a query associated with a downstream prediction task for the primary GNN model 110. In an example, the query may correspond to a test graph associated with the downstream prediction task. Further, the I/O device 210 may render outputs such as, the determined first information. The I/O device 210 which may include various input and output devices, may be configured to communicate with the processor 204. Examples of the I/O device 210 may include, but are not limited to, a touch screen, a keyboard, a mouse, a joystick, the display device 210A, a microphone, and a speaker.

The display device 210A may include suitable logic, circuitry, and interfaces that may be configured to render the determined first information. The display device 210A may be a touch screen which may enable a user to provide user-inputs via the display device 210A. The touch screen may be at least one of a resistive touch screen, a capacitive touch screen, or a thermal touch screen. The display device 210A may be realized through several known technologies such as, but not limited to, a Liquid Crystal Display (LCD) display, a Light Emitting Diode (LED) display, a plasma display, or an Organic LED (OLED) display technology, or other display devices. In accordance with an embodiment, the display device 210A may refer to a display screen of a head mounted device (HMD), a smart-glass device, a see-through display, a projection-based display, an electro-chromic display, or a transparent display.

The network interface 212 may include suitable logic, circuitry, and interfaces that may be configured to facilitate communication between the processor 204 (i.e., the electronic device 102) and the server 104, via the communication network 108. The network interface 212 may be implemented by use of various known technologies to support wired or wireless communication of the electronic device 102 with the communication network 108. The network interface 212 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, or a local buffer circuitry. The network interface 212 may be configured to communicate via wireless communication with networks, such as the Internet, an Intranet, or a wireless network, such as a cellular telephone network, a wireless local area network (LAN), and a metropolitan area network (MAN). The wireless communication may be configured to use one or more of a plurality of communication standards, protocols and technologies, such as Enhanced Data GSM Environment (EDGE), wideband code division multiple access (W-CDMA), Long Term Evolution (LTE), 5^{th} Generation (5G) New Radio (NR), Global System for Mobile Communications (GSM), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), Worldwide Interoperability for Microwave Access (Wi-MAX), a protocol for email, instant messaging, and a Short Message Service (SMS).

Modifications, additions, or omissions may be made to the example electronic device 102 without departing from the scope of the present disclosure. For example, in some embodiments, the example electronic device 102 may include any number of other components that may not be explicitly illustrated or described for the sake of brevity.

FIG. 3 is a diagram that illustrates an exemplary execution pipeline for training of a primary graph neural network (GNN) model for downstream prediction tasks associated with graph continual learning, in accordance with an embodiment of the disclosure. FIG. 3 is described in conjunction with elements from FIG. 1 and FIG. 2. With reference to FIG. 3, there is shown an execution pipeline 300. The exemplary execution pipeline 300 may include a sequence of operations that may be executed by the processor 204 of the electronic device 102 of FIG. 1 for training of a primary graph neural network (GNN) model (e.g., the primary GNN model 110) for downstream prediction tasks associated with graph continual learning.

The execution pipeline 300 includes a set of incoming graphs (collectively referred as 302) associated with a set of incoming tasks. The set of incoming graphs 302 includes a first graph 302A (denoted as a graph "Gt") associated with a first task (i.e., a task "t"), which may be a currently received task. Graphs "G₁", "G₂", ... "Gₜ₋₁" may be a sequence of graphs associated with incoming graph learning tasks, which may be received prior to the first task "t". Further, in FIG. 3, there is shown a memory buffer (e.g., the stochastic memory buffer 114), denoted by 304, which may include condensed graph distributions (CGDs) of the set of incoming graphs 302. In FIG. 3, there is further shown, a set of CGDs (collectively referred as 306) associated with the set of incoming graphs 302. Further, there are shown, a set of sample graphs 308 associated with the set of CGDs 306, one or more auxiliary GNN models 310, a loss 312, and an operation 314 (associated with update of statistics of the set of CGDs 306). In FIG. 3, there are further shown, a CGD 316A (denoted by "D₁") associated with a task "1", a CGD 316B (denoted by "D₂") associated with a task "2",... and a CGD 316T (denoted by "Dt") associated with the task "t" (i.e., the first task). Further, there is shown, a sample graph 318A with a task ID "1", a sample graph 318B with a task ID "2", ... and a sample graph 318T with a task ID "t". Also shown is a primary GNN model 320 (denoted "GNN^{t}") to be trained for the t^{th} task (i.e., the first task) and a prediction result 322.

In the execution pipeline 300, there is shown a sequence of operations that may start from 326 and end at 334. Training phase of the primary GNN model 320 may be divided into two sets of operations including a first set of operations (e.g., operations 324 to 330) associated with a creation/update of the memory buffer 304 and a second set of operations (e.g., operations 332 to 334) associated with an update of the primary GNN model 320 using the created/updated memory buffer 304.

With reference to the first set of operations, at 324, the set of incoming graphs 302 associated with the set of incoming tasks may be received. The processor 204 of the electronic device 102 may be configured to receive the set of incoming graphs 302 associated with the set of incoming tasks. For example, the processor 204 may receive the first graph 302A (e.g., "Gt") associated with the first task (e.g., the task "t"). The first graph 302 may be received from the database 106 (which may store graphs associated with tasks), via the server 104.

At 326, the first graph 302A may be fed into the one or more auxiliary GNN models 310 (e.g., the one or more auxiliary GNN models 112). The processor 204 may be configured to feed the first graph 302A into the one or more auxiliary GNN models 310. The processor 204 may be further configured to extract the set of CGDs 306 associated with the set of incoming graphs 302 from the memory buffer 304 (e.g., the stochastic memory buffer 114), based on the first graph 302A. Further, the processor 204 may be configured to select a set of sample graphs from a set of condensed graph distributions (CGDs) associated with the set of incoming tasks (i.e., the incoming graph learning tasks). The selection of the set of sample graphs from the set of CGDs may be based on the extraction of the set of CGDs from the memory buffer 304 (e.g., the stochastic memory buffer 114). For example, the processor 204 may select the set of sample graphs 308 from the set of CGDs 306 (e.g., the distributions "Dᵢ", where "i" may lie between "1" and "t-1") associated with the set of incoming tasks. In an embodiment, the processor 204 may sample randomly from the set of CGDs 306 to select the set of sample graphs 308 from the set of CGDs 306. The processor 204 may be further configured to feed the set of sample graphs 308 into the one or more auxiliary GNN models 310, along with the first graph 302A.

The processor 204 may be configured to determine the loss 312 (e.g., a second loss) to match characteristics (e.g., feature-matching) between the first graph 302A and the set of sample graphs 308 (from the set of CGDs 306), based on the first graph 302A and the set of sample graphs 308 fed into the one or more auxiliary GNN models 310. To match the characteristics between the first graph 302A and the set of sample graphs 308, the processor 204 may determine first embeddings for the first graph 302A and second embeddings for each of the set of sample graphs 308. The processor 204 may determine a distance or similarity (e.g., a similarity score) between the first embeddings and the second embeddings to match characteristics between the first graph 302A and the set of sample graphs 308. Thus, the loss 312 may be determined based on an application of the one or more auxiliary GNN models 310 on the first graph 302A and the set of sample graphs 308. For example, the loss 312 may be determined based on a squared-error loss associated with an output (e.g., a measure of difference between the first embeddings and the second embeddings) of the one or more auxiliary GNN models 310. The squared-error loss may increase quadratically with difference between expected (e.g., the values associated with each sample graph) versus actual values (e.g., the values associated with the first graph 302A).

At 314, a set of statistics associated with the set of CGDs 306 may be updated. In an embodiment, the processor 204 may be configured to update the set of statistics associated with the set of CGDs 306 based on the determined loss 312. In an embodiment, the update of the set of statistics may be based on the one or more auxiliary GNN models 310, the first graph 302A, and the set of sample graphs 308. As disclosed, the loss 312 may be determined based on the application of the one or more auxiliary GNN models 310 on the first graph 302A and the set of sample graphs 308. Based on the application of the one or more auxiliary GNN models 112, the electronic device 102 may update the set of statistics associated with the set of CGDs 306. For example, the electronic device 102 may update the set of statistics, such as, a mean, a variance, a standard deviation, a mode, or a median, associated with the set of CGDs 306. In an embodiment, the update of the set of statistics associated with the set of CGDs may be further based on the determined second loss (i.e., the loss 312 determined at 326). For example, the second loss may be used to adjust or estimate the set of statistics and thereby update the set of statistics.

The electronic device 102 may be configured to learn the first CGD associated with the first task (for the first graph 302A), based on the update of the set of statistics (at 314). For example, based on the update of the statistics of the set of CGDs 306, the electronic device 102 may estimate parameters of a distribution associated with the first graph 116. Based on the estimated parameters, the electronic device 102 may be configured to learn the first CGD associated with the first task. In an example, the electronic device 102 may use techniques such as, but not limited to, expectation-maximization (EM), method of moments, maximum likelihood, or least-squares, to estimate the parameters and/or optimize the parameters of a predetermined graph distribution (e.g., a Gaussian probability density function or a standard normal distribution with zero mean and unit variance) and learn the first CGD.

At 328, a set of operations associated with the learning of the first CGD may be iterated up to a predetermined epoch value. The processor 204 may be configured to iterate the set of operations associated with the learning of the first CGD up to the predetermined epoch value. The set of operations for the learning of the first CGD may include an operation for feeding the one or more auxiliary GNN models 310 with the first graph 302A, and an operation for selecting the set of sample graphs 308. The set of such operations may further include an operation for feeding the one or more auxiliary GNN models 310 with the set of sample graphs 308, an operation for determining of the loss 312, and an operation (at 314) for updating the set of statistics associated with the set of CGDs 306. The iterative learning of the first CGD may improve an accuracy of the first CGD in modeling a distribution associated with the first graph 302A associated with the first task (i.e., the task "t").

At 330, the first CGD associated with the first task (i.e., the task "t") may be stored in the memory buffer 304. The electronic device 102 may be configured to store the first CGD associated with the first task (e.g., the task "t") to the memory buffer 304 (e.g., the stochastic memory buffer 114). Thus, the memory buffer 304 may include CGD (i.e., the first CGD) of the current task (i.e., task "t") and CGDs (e.g., the set of CGDs 306) of different historical tasks.

With reference to the second set of operations, at 332, the CGDs of various tasks may be extracted from the memory buffer 304. The processor 204 may be configured to extract the CGDs of the different tasks from the memory buffer 304. For example, the processor 204 may extract a CGD 316A (denoted by "D₁") associated with the task "1", a CGD 316B (denoted by "D₂") associated with the task "2", ..., and a CGD 316T (i.e., the first CGD, denoted by "Dt") associated with the task "t" (i.e., the first task).

At 334, a plurality of sample graphs may be re-selected and fed into the primary GNN model 320 along with the first graph 302A to determine the prediction result 322. The processor 204 may be configured to re-select a plurality of sample graphs from the first CGD and the set of CGDs 306. In an embodiment, the plurality of sample graphs may be re-selected from the memory buffer 304 (i.e., the stochastic memory buffer 114). For example, the processor 204 may extract the CGDs 316A, 316B, ...and 316T from the memory buffer 304 and may re-select the plurality of sample graphs, such as, a sample graph 318A for task ID "1", a sample graph 318B for task ID "2", ...and a sample graph 318T for task ID "t", respectively. The re-selection of the plurality of sample graphs may correspond to a random sampling from the CGDs 316A, 316B, ...and 316T.

The processor 204 may be configured to feed the plurality of sample graphs and the first graph 302A to the primary GNN model 320 (i.e., "GNN^{t}"). The processor 204 may apply the primary GNN model 320 (i.e., "GNN^{t}") on the plurality of sample graphs and the first graph 302A. Further, the processor 204 may determine a first loss associated with the primary GNN model 320 (i.e., "GNN^{t}"). The first loss may be determined based on the application of the primary GNN model 320 (i.e., "GNN^{t}") on the first graph 302A and the plurality of sample graphs 318A, 318B, ...and 318T. The first loss may correspond to a prediction error associated with a downstream prediction task of the primary GNN model 320 (i.e., "GNN^{t}"). For example, the first loss may be determined based on a squared-error loss associated with an output (e.g., a measure of difference between embeddings of the first graph 302A and embeddings of each of the plurality of sample graphs) of the primary GNN model 320. The squared-error loss may increase quadratically with difference between expected (e.g., the values associated with each sample graph) versus actual values (e.g., the values associated with the first graph 302A). The primary GNN model 320 (i.e., "GNN^{t}") may be configured to generate the prediction result 322 associated with a prediction task (e.g., a downstream prediction task), based on the determined first loss. That is, the determined first loss may be used to train/fine-tune the primary GNN model 320 (i.e., "GNN^{t}") to make predictions associated with the task "t".

In an embodiment, the processor 204 may be configured to initialize the primary GNN model 320 based on a pre-trained GNN model associated with a second task (e.g., the task "t-1") preceding the firsttask (e.g., the task "t") in a timeline of the set of incoming tasks (e.g., the incoming graph learning tasks). That is, the processor 204 may initialize a GNN model, which may be pre-trained for the previous task (e.g., the task "t-1"), as an initial GNN model for the current task (i.e., the task "t"). In an embodiment, primary GNN model 320 may be configured to generate the prediction result further based on the initialization of the primary GNN. Thus, the primary GNN model 320 (i.e., "GNN^{t}") may be trained/tuned for the task "t". As later tasks (e.g., a task "t+1") and associated graphs (e.g., a graph "Gₜ₊₁") are received, the primary GNN model 320 (i.e., "GNN^{t}") may be trained/tuned for the new tasks (e.g., the task "t+1"), based on the earlier version (i.e., "GNN^{t}") of the primary GNN model 320 (i.e., the primary GNN model trained for the task "t"). Thus, the disclosed embodiments provide a scalable graph continual learning technique.

Embodiments of the disclosure relate to condensed graph distributions (CGDs) and a stochastic memory buffer for graph continual learning. According to the disclosure, for each new graph (e.g., the first graph 302A) associated with a certain task (e.g., the first task), a primary GNN model (e.g., the primary GNN model 320) may be trained to learn the particular task along with replay of historical tasks using samples drawn from a stored memory (e.g., the memory buffer 304) of condensed graph distributions. The disclosed computing system may require a reduced storage overhead based on an optimization of the storage memory (e.g., the memory buffer 304) to achieve better scalability. The selective sampling from the optimized memory buffer corresponding to given test sample(s) may improve the overall predictive performance on previous tasks. For example, as the corresponding CGD of each previous task (e.g., the tasks "1", "2", ... "t-1") may be used to train the primary GNN model 320 for the current task (e.g., the task "t"), the trained primary GNN model 320 may have an improved predictive performance and may not suffer from the catastrophic forgetting issue. Thus, a scalable graph continual learning technique with improved predictive performance and reduced memory size is disclosed.

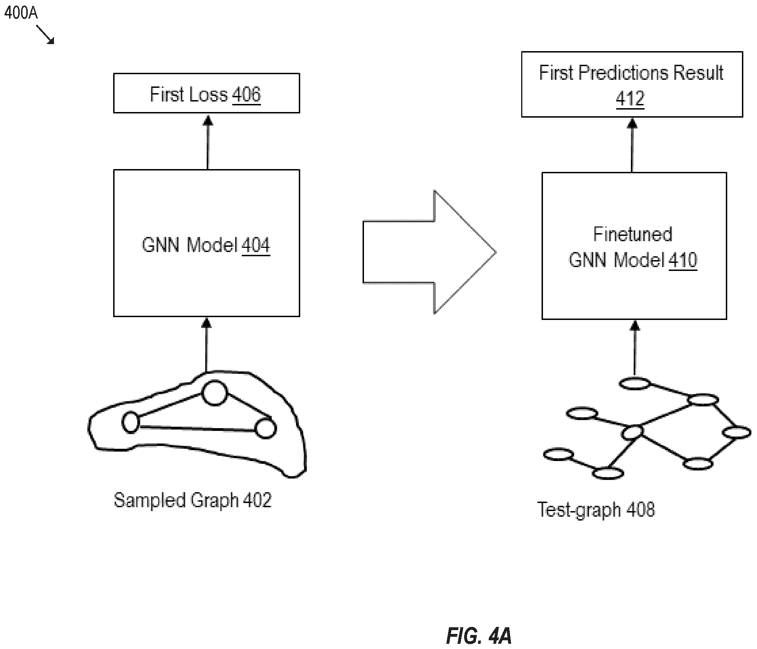

FIG. 4A is a diagram that illustrates exemplary execution pipeline for determination of an inference (e.g., a node label inference) from a primary graph neural network (GNN) model in a task-incremental setting, in accordance with an embodiment of the disclosure. FIG. 4A is described in conjunction with elements from FIG. 1, FIG. 2, and FIG. 3. With reference to FIG. 4A, there is shown an exemplary execution pipeline 400A. The execution pipeline 400A may include a sampled graph 402, a GNN model 404 (e.g., the primary GNN model 320), a first loss 406, a test-graph 408, a fine-tuned GNN model 410 (i.e., the primary GNN model 320 trained/tuned for a current task (e.g., the first task "t")), and a first prediction result 412.

As shown in FIG. 4A, the processor 204 may sample a graph (e.g., the sampled graph 402), based on a random selection of the graph, from a CGD of a certain task with a particular task ID, stored in the stochastic memory buffer 114 (e.g., the memory buffer 304). For example, the processor 204 may select the sample graph 318B associated with the task "2" with the task ID "2", from the "t" tasks stored in the memory buffer 304. The sampled graph 402 may be fed to the GNN model 404. Based on an application of the GNN model 404 on the sampled graph 402, the GNN model 404 may determine the first loss 406 with respectto the first graph (e.g., the first graph 302A). The first loss 406 may correspond to a prediction error associated with a downstream prediction task of the GNN model 404 (e.g., the primary GNN model 320 (i.e., "GNN^{t}")). For example, the first loss 406 may be determined based on a squared-error loss associated with an output (e.g., a measure of difference between embeddings of the first graph 302A and embeddings of the sample graph 318B) of the GNN model 404. The squared-error loss may increase quadratically with difference between expected (e.g., the values associated with the sample graph 318B) versus actual values (e.g., the values associated with the first graph 302A). In the above example, the first loss 406 may be determined for graphs associated with the task ID "2", in the stochastic memory buffer 114 (e.g., the memory buffer 304). Similarly, the first loss 406 may be determined for all tasks stored in the stochastic memory buffer 114 (e.g., the memory buffer 304).

In an embodiment, the GNN model 404 may be fine-tuned to obtain the fine-tuned GNN model 410, based on the first graph 302A and the determined first loss 406. For example, the processor 204 may fine-tune the GNN model 404 to obtain the fine-tuned GNN model 410, based on techniques, such as, but not limited to, a gradient descent technique, a local search technique, a global search technique, or a transfer learning technique. The processor 204 may receive the test-graph 408 and feed the received test-graph 408 to the fine-tuned GNN model 410. In an embodiment, the test-graph 408 may correspond to a downstream prediction task and may have a certain predetermined task ID (e.g., the task ID "3"). The processor 204 may apply the fine-tuned GNN model 410 on the received test-graph 408 and determine the first prediction result 412, based on the application of the fine-tuned GNN model 410. A prediction result associated with a task-incremental setting (with a known task ID of the test-graph 408) may thus be obtained.

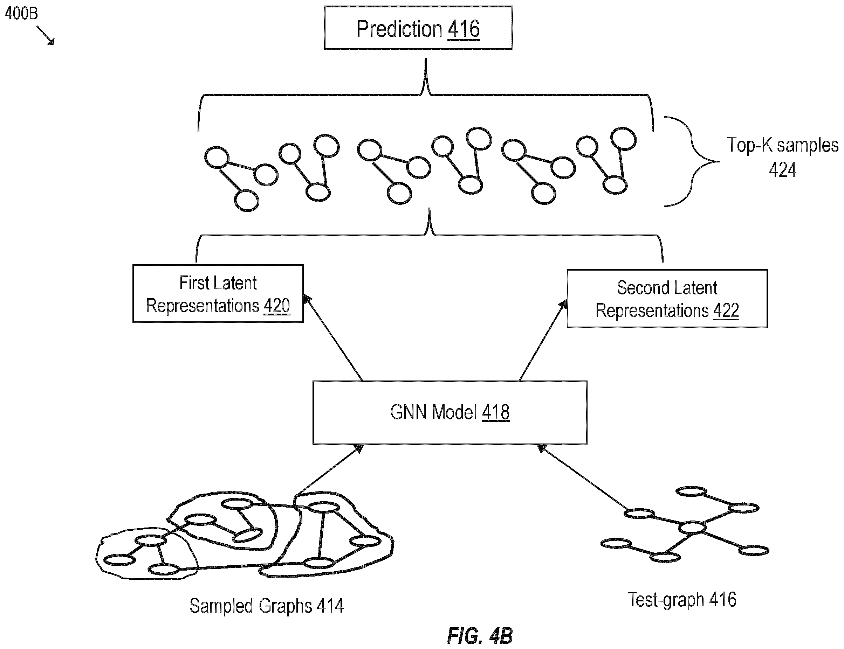

FIG. 4B is a diagram that illustrates exemplary execution pipeline for determination of an inference (e.g., a node label inference) from a primary graph neural network (GNN) model in a one of a domain-incremental setting or a class-incremental setting, in accordance with an embodiment of the disclosure. FIG. 4B is described in conjunction with elements from FIG. 1, FIG. 2, FIG. 3, and FIG. 4A. With reference to FIG. 4B, there is shown an exemplary execution pipeline 400B. The execution pipeline 400B may include sampled graphs 414, a test-graph 416, a GNN model 418 (e.g., the primary GNN model 320), first latent representations 420 associated with the memory buffer 304 (e.g., the stochastic memory buffer 114), second latent representations 422 associated with the test-graph 416, top-K samples 424, and a second prediction result 426.

As shown in FIG. 4B, the processor 204 may be configured to select sampled graphs 414, based on random sampling of graphs from CGDs of all task IDs (of all tasks received till the current task) stored in the memory buffer 304 (e.g., the stochastic memory buffer 114). The processor 204 may receive the test-graph 416 and may feed the sampled graphs 414 and the test-graph 416 to the GNN model 418 (e.g., the primary GNN model 320). The processor 204 may apply the GNN model 418 on the fed sample graphs 414 and the test-graph 416. Based on the application of the GNN model 418, the processor 204 may determine the first latent representations 420 and the second latent representations 422, respectively, for the sample graphs 414 and the test-graph 416. In an embodiment, each latent representation of the first latent representations 420 and the second latent representations 422 may correspond to a set of node embeddings (or vectors) representative of features of nodes and edges of respective graphs. The first latent representations 420 may be associated with the CGDs of tasks stored in memory buffer 304 (e.g., the stochastic memory buffer 114). The second latent representations 422 may be associated with the test-graph 416. In an embodiment, the processor 204 may be configured to select a predetermined number (e.g., "K") of top similar sample graphs from the memory buffer 302 (e.g., the stochastic memory buffer 114). The top similar sample graphs (denoted as the top-K samples 424) may be determined based on a similarity between the first latent representations 420 (i.e., node embeddings of the sampled graphs 414) and the second latent representations 422 (i.e., node embeddings of the test-graph 416). Based on the top-K samples 424, the processor 204 may determine the second prediction result 426. For example, the processor 204 may execute a majority voting operation on labels associated with the top-K samples 424 in the memory buffer 304 (e.g., the stochastic memory buffer 114) to determine a prediction label (i.e., the second prediction result 426) associated with the test-graph 416. A prediction result associated with a domain-incremental setting or a class-incremental setting (with an unknown task ID of the test-graph 416) may thus be obtained.

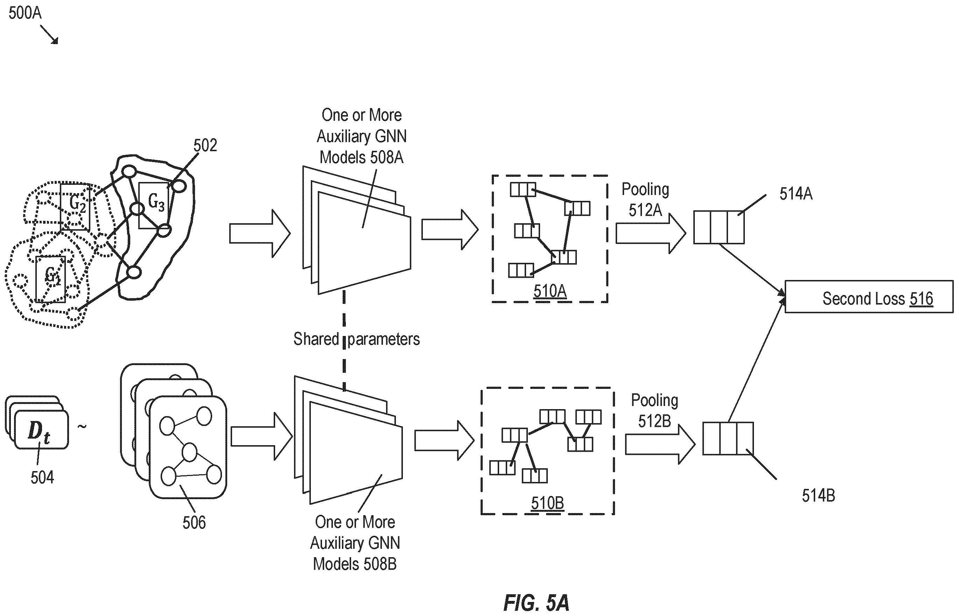

FIG. 5A is a diagram that illustrates an exemplary scenario for determination of a second loss between an input time-evolving graph and graphs sampled from condensed graph distributions (CGDs), in accordance with an embodiment of the disclosure. FIG. 5A is described in conjunction with elements from FIG. 1, FIG. 2, FIG. 3, FIG. 4A, and FIG. 4B. With reference to FIG. 5A, there is shown an exemplary scenario 500A. The scenario 500A includes an input time-evolving graph 502, a set of CGDs 504, set of sampled graphs 506, one or more auxiliary GNNs 508A, one or more auxiliary GNNs 508B, node embeddings 510A, node embeddings 510B, a pooling operation 512A, a pooling operation 512B, the first one-dimensional (1D) vector 514A, the second 1D vector 514B, and a second loss 516.

As shown in FIG. 5A, in an example, the input time-evolving graph 502 may correspond to a graph "G₃" associated with a task "3". Prior instances of the input time-evolving graph 502 may correspond to a graph "G₂" (associated with a task "2") and a graph "G₁" (associated with a task "1"). The chronological order of incoming tasks received by the processor 204 may include the task "1" followed by the task "2", which may be further followed by the task "3". The processor 204 may be configured to feed the input time-evolving graph 502 (e.g., the graph "G₃") to the one or more auxiliary GNNs 508A and apply the one or more auxiliary GNNs 508A on the fed input time-evolving graph 502 (i.e., the graph "G₃"). Based on the application of the one or more auxiliary GNNs 508A, the processor 204 may determine the node embeddings 510A. The node embeddings 510A may correspond to features associated with nodes of the input time-evolving graph 502 (e.g., the graph "G₃") and may be represented as a vector corresponding to each such node. In an example, each of the node embeddings 510A may be a 1x256 vector representation of a respective node.

The processor 204 may be configured to select the set of sampled graphs 506 from the set of CGDs 504 associated with the previously received incoming tasks. For example, the processor 204 may select a sample graph "SG₁" associated with the task "1" from a CGD (e.g., "D₁") associated with the task "1". Similarly, the processor 204 may select a sample graph "SG₂" associated with the task "2" from a CGD (e.g., "D₂") associated with the task "2". In an embodiment, the set of sampled graphs 506 may correspond to sample nodes and edges that may be used to construct a sample graph. A degree of similarity between such sample graphs with respect to the input time-evolving graph 502 may be determined. The degree of similarity may be used to determine the second loss 516, as described hereinafter.

The processor 204 may be configured to feed each sampled graph of the set of sampled graphs 506 (e.g., "SG₁" and "SG₂") to the one or more auxiliary GNNs 508B and apply the one or more auxiliary GNNs 508B on the fed set of sampled graphs 506 (e.g., "SG₁" and "SG₂"). Based on the application of the one or more auxiliary GNNs 508B, the processor 204 may determine the node embeddings 510B. The node embeddings 510B may correspond to features associated with nodes of each sample graph of the set of sampled graphs 506 (e.g., "SG₁" and "SG₂") and may be represented as a vector corresponding to each such node. In an example, each of the node embeddings 510B may be a 1x256 vector representation of a respective node.

In an embodiment, the one or more auxiliary GNN models 310 (of FIG. 3) may correspond to a first set of GNN models associated with shared parameters. For example, the first set of GNN models may include the one or more auxiliary GNNs 508A and the one or more auxiliary GNNs 508B, which may share same parameters. In an embodiment, the update of the set of statistics may be further based on an application of a GNN model (e.g., the one or more auxiliary GNNs 508A or the one or more auxiliary GNNs 508B) from the first set of GNN models on a corresponding graph from the first graph (e.g., the input time-evolving graph 502) and the set of sample graphs (e.g., the set of sampled graphs 506). The update of the set of statistics is described further, for example, in FIG. 3 (at 314).

The processor 204 may be configured to apply the pooling operation 512A on the node embeddings 510A and the pooling operation 512B on the node embeddings 510B. In an example, the pooling operations 512A and 512B may correspond to at least one of a max pooling operation or an average pooling operation. The pooling operations 512A and 512B may reduce spatial dimension(s) of the node embeddings 510A and 510B. For example, the node embeddings 510A may include a 1x256 vector for each respective node of the input time-evolving graph 502. Similarly, the node embeddings 510B may include a 1x256 vector for each respective node of the set of sampled graphs 506. Based on the pooling operations 512A and 512B, the node embeddings 510A and 510B may be converted into the first 1D vector 514A and the second 1D vector 514B, respectively.

The processor 204 may be configured to determine the second loss 516 associated with the one or more auxiliary GNN models 310, based on a feature-matching between the first graph (i.e., the input time-evolving graph 502) and the set of sample graphs (e.g., the set of sampled graph 506). To determine the second loss 516, the processor 204 may determine a degree of similarity between the first 1D vector 514A associated with the node embeddings 510A and the second 1D vector 514B associated with the node embeddings 510B. For example, the degree of similarity may be determined based on, but not limited to, a cosine distance, a Euclidean distance, a dot product, or a Manhattan distance, between the first 1D vector 514A and the second 1D vector 514B. The processor 204 may determine the second loss 516 based on the determined degree of similarity between the first 1D vector 514A and the second 1D vector 514B. Thus, the feature-matching may correspond to the determination of the degree of similarity between the first 1D vector 514A (or the node embeddings 510A) and the second 1D vector 514B (or the node embeddings 510B). In an embodiment, the update of the set of statistics associated with the set of CGDs 306 may be further based on the determined second loss 516. The update of the set of statistics is described further, for example, in FIG. 3 (at 314).

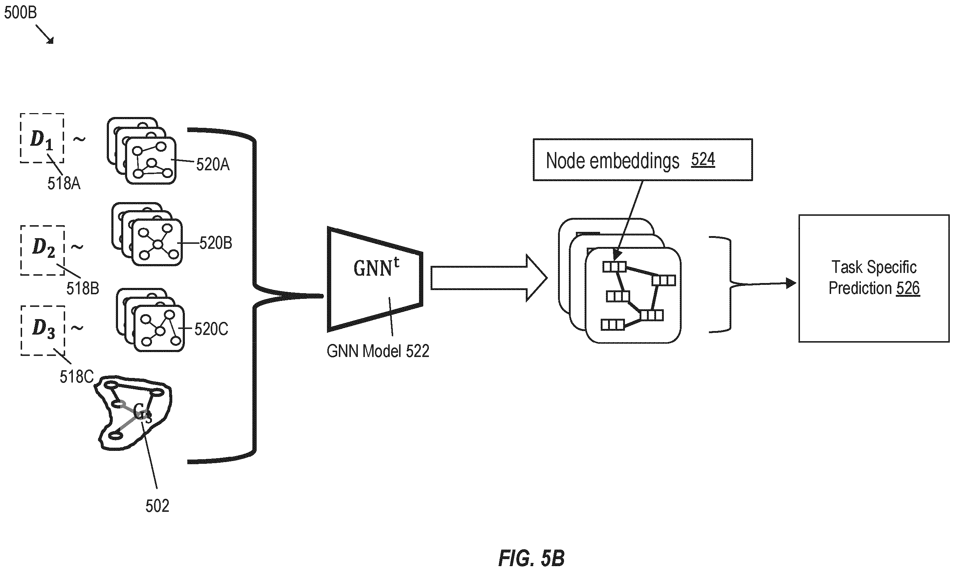

FIG. 5B is a diagram that illustrates an exemplary scenario for determination of a task-specific prediction based on training of a graph neural network (GNN) model for a task, in accordance with an embodiment of the disclosure. FIG. 5B is described in conjunction with elements from FIG. 1, FIG. 2, FIG. 3, FIG. 4A, FIG. 4B, and FIG. 5A. With reference to FIG. 5B, there is shown an exemplary scenario 500B. The scenario 500B includes the input time-evolving graph 502, a CGD 518A, a CGD 518B, a CGD 518C, a sampled graph 520A, a sampled graph 520B, a sampled graph 520C, a GNN model 522 (e.g., the primary GNN model 320), node embeddings 524, and a task-specific prediction 526.

As shown in FIG. 5B, in an example, the input time-evolving graph 502 may correspond to a graph "G₃" associated with a task "3". The processor 204 may be configured to re-select a plurality of sample graphs from the first CGD associated with the first task and the set of CGDs 318. For example, the set of CGDs 318 may correspond to the CGDs 518A and 518B. The first CGD associated with the firsttask may correspond to the CGD 518C associated with the task "3" (which may correspond to the input time-evolving graph 502). As shown, the sampled graph 520A may be from the CGD 518A (e.g., "D₁"), the sampled graph 520B may be from the CGD 518B (e.g., "D₂"), and the sampled graph 520C may be from the CGD 518C (e.g., "D₃").

The processor 204 may be configured to feed the input time-evolving graph 502 (i.e., the graph "G₃") along with the sampled graphs 520A, 520B, and 520C into the GNN model 522 (which may be denoted by "GNN^{t}"). In an embodiment, the processor 204 may be configured to initialize the GNN model 522 (e.g., the primary GNN model 320) based on a pre-trained GNN model associated with a second task (e.g., a task "t-1", such as, task "2" when t=3) preceding the first task (e.g., the task "t", where t=3) in a timeline of a set of incoming tasks (e.g., the incoming graph learning tasks). The GNN model 522 (e.g., the primary GNN model 320) may be configured to generate a prediction result further based on the initialization of the primary GNN model 320. The initialization of the GNN model is described further, for example, in FIG. 3 (at 334).

The processor 204 may apply the GNN model 522 on each of the fed input time-evolving graph 502 (i.e., the graph "G₃") and the sampled graphs 520A, 520B, and 520C. Based on the application of the GNN model 522, the processor 204 may determine the node embeddings 524. In an embodiment, the node embeddings 524 may correspond to node-level representations for all the fed graphs (e.g., the fed input time-evolving graph 502 (i.e., the graph "G₃") and the sampled graphs 520A, 520B, and 520C). In an example, each of the node embeddings 524 may be a 1x256 vector representation of a respective node.

The processor 204 may determine the task-specific prediction 526 based on the node embeddings 524. For example, the processor 204 may be configured to predict node labels associated with nodes of the fed graphs from the node embeddings 524. In an embodiment, the processor 204 may be configured to determine a first loss associated with GNN model 522 (e.g., the primary GNN model 320), based on the first graph (e.g., the input time-evolving graph 502 (i.e., the graph "G₃") and the re-selection of the plurality of sample graphs (e.g., the sampled graphs 520A, 520B, and 520C). The GNN model 522 (e.g., the primary GNN model 320) may be configured to generate a prediction result (e.g., the task-specific prediction 526) associated with a prediction task (e.g., the task "3"), based on the determined first loss. The determination of the task-specific prediction is described further, for example, in FIG. 3 (at 334).

It should be noted that scenarios 500A and 500B of FIGs. 5A and 5B, respectively, are for exemplary purposes and should not be construed to limit the scope of the disclosure.

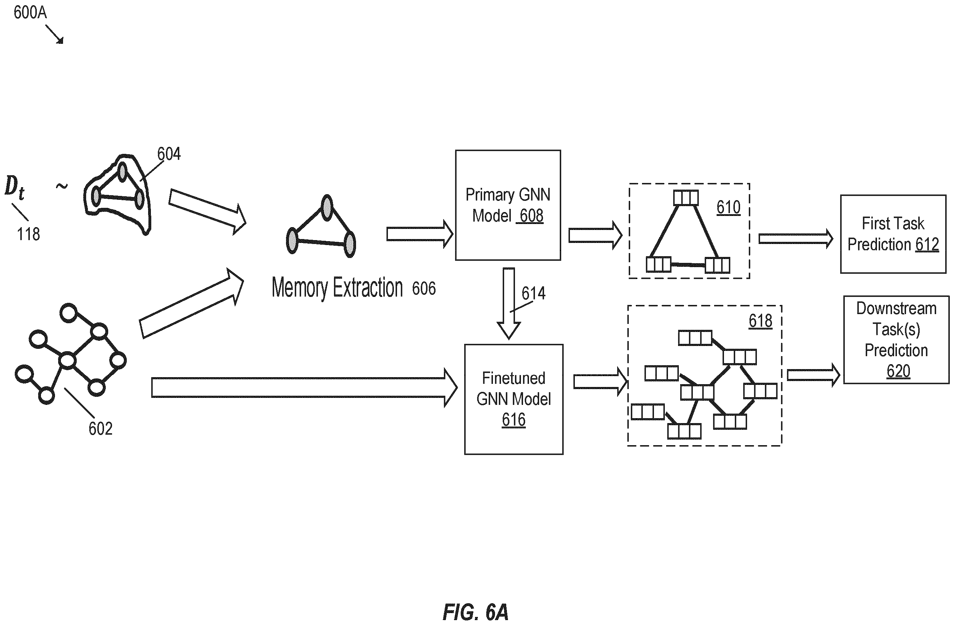

FIG. 6A is a diagram that illustrates exemplary scenario for determination of an inference (e.g., a node label inference) from a primary graph neural network (GNN) model in a task-incremental setting, in accordance with an embodiment of the disclosure. FIG. 6A is described in conjunction with elements from FIG. 1, FIG. 2, FIG. 3, FIG. 4A, FIG. 4B, FIG. 5A, and FIG. 5B. With reference to FIG. 6A, there is shown an exemplary scenario 600A. The scenario 600A may include a first test graph 602, a first group of sample graphs 604, a memory extraction operation 606, a primary GNN model 608, a first set of node embeddings 610, and a first task-specific prediction 612. The scenario 600A may further include a third loss 614, a fine-tuned GNN model 616, a second set of node embeddings 618, and a downstream-task prediction 620.

As shown in FIG. 6A, the processor 204 may be configured to receive a first test graph (e.g., the first test graph 602) associated with a first task identifier (ID). At 606, the processor 204 may be configured to execute the memory extraction operation. The processor 204 may be configured to select a first group of sample graphs (e.g., the first group of sample graphs 604) from the first CGD and the set of CGDs 118, based on the first task ID. For example, sample graphs may be from CGDs (in the stochastic memory buffer 114) for which the task ID corresponds to the first task ID. Thus, the first group of sample graphs 604 may have the same task ID as the received first test graph 602. Based on the memory extraction operation 606, the processor 204 may retrieve a set of graphs including the first test graph 602 and the first group of sample graphs 604.

The processor 204 may be configured to feed the primary GNN model 608 with the retrieved set of graphs including the first test graph 602 and the first group of sample graphs 604. The processor 204 may apply the primary GNN model 608 on the fed set of graphs. In an embodiment, the processor 204 may be configured to generate a first set of node embeddings (e.g., the first set of node embeddings 610) based on the primary GNN model 608, the received first test graph 602, and the first group of the sample graphs 604. For example, based on the application of the primary GNN model 608, the processor 204 may be configured to generate a first set of node embeddings (e.g., the first set of node embeddings 610). In an example, the first set of node embeddings 610 may include a 1x256 vector for each respective node of the received firsttest graph 602 and the first group of the sample graphs 604.

In an embodiment, the processor 204 may be configured to generate a first task-specific prediction (e.g., the first task-specific prediction 612) associated with the first task ID, based on the first set of node embeddings 610. For example, the processor 204 may predict node labels associated with nodes of the first test graph 602 based on the generated first set of node embeddings 610. Based on the predicted node labels, the processor 204 may generate the first task-specific prediction 612. In an embodiment, the processor 204 may be configured to control rendering of second information including the first task-specific prediction 612. The processor 204 may generate the second information based on the generated first task-specific prediction 612. The processor 204 may render the second information on a display device (e.g., the display device 208A of FIG. 2) associated with the electronic device 102.

The processor 204 may be configured to determine a third loss (e.g., the third loss 614) associated with the primary GNN model 608 based on the first group of sample graphs 604. For example, based on an application of the primary GNN model 608 on the first group of sample graphs 604, the primary GNN model 608 may determine the third loss 614 with respectto the received first test graph 602. For example, the third loss 614 may be determined based on a squared-error loss associated with an output (e.g., a measure of difference between embeddings of the received first test graph 602 and embeddings of a sample graph of the first group of sample graphs 604) of the primary GNN model 608. The squared-error loss may increase quadratically with difference between expected (e.g., the values associated with the sample graph 318B) versus actual values (e.g., the values associated with the first graph 302A).

In an embodiment, the processor 204 may be configured to generate a fine-tuned GNN model (e.g., the fine-tuned GNN model 616) from the primary GNN model 608, based on the determined third loss 614. For example, the processor 204 may fine-tune the primary GNN model 608 to obtain the fine-tuned GNN model 616, based on techniques, such as, but not limited to, a gradient descent technique, a local search technique, a global search technique, or a transfer learning technique.

In an embodiment, the processor 204 may be configured to generate a second set of node embeddings (e.g., the second set of node embeddings 618) based on the generated fine-tuned GNN model 616 and the received firsttest graph 602. For example, the processor 204 may feed the received first test graph 602 to the fine-tuned GNN model 616. Further, the processor 204 may apply the fine-tuned GNN model 616 on the received first test graph 602 to generate the second set of node embeddings 618. In an example, the second set of node embeddings 618 may include a 1x256 vector for each respective node of the received first test graph 602.

In an embodiment, the processor 204 may be configured to generate a downstream-task prediction (e.g., the downstream-task prediction 620) for the received first test graph 602, based on the generated second set of node embeddings 618. In an embodiment, the processor 204 may be configured to control rendering of third information including the generated the downstream-task prediction 620. The processor 204 may generate the third information based on the generated downstream-task prediction 620. The processor 204 may render the third information on a display device (e.g., the display device 208A of FIG. 2) associated with the electronic device 102. In an embodiment, each of the first task-specific prediction 612 and the downstream-task prediction 620 may correspond to a task-incremental inference associated with the primary GNN model 608.

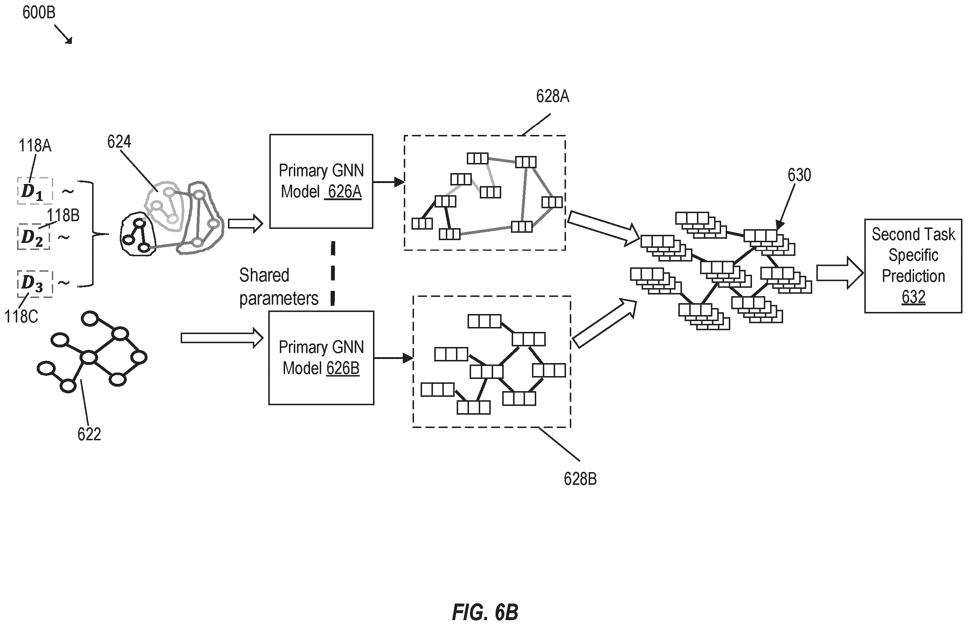

FIG. 6B is a diagram that illustrates exemplary scenario for determination of an inference (e.g., a node label inference) from a primary graph neural network (GNN) model in a one of a domain-incremental setting or a class-incremental setting, in accordance with an embodiment of the disclosure. FIG. 6B is described in conjunction with elements from FIG. 1, FIG. 2, FIG. 3, FIG. 4A, FIG. 4B, FIG. 5A, FIG. 5B, and FIG. 6A. With reference to FIG. 6B, there is shown an exemplary scenario 600B. The scenario 600B may include a second test graph 622, a CGD 118A, a CGD 118B, a CGD 118C, a second group of sample graphs 624, a primary GNN model 626A, a primary GNN model 626B, a third set of node embeddings 628A, a fourth set of node embeddings 628B, a stacked node embedding 630, and a second task-specific prediction 632.

As shown in FIG. 6B, the processor 204 may be configured to receive a second test graph (e.g., the second test graph 622) associated with associated with an anonymous task ID. That is, the task ID associated with the second test graph 622 may not be known (and/or may not be received at the electronic device 102). The processor 204 may be configured to select a second group of sample graphs (e.g., the second group of sample graphs 624) from the first CGD (e.g., the CGD 118C) and the set of CGDs (e.g., the CGDs 118A and 118B), based on a set of historical task IDs (e.g., the task IDs "1", "2", and "3") associated with the incoming graph learning tasks (e.g., the set of incoming tasks).

The processor 204 may be configured to feed the second test graph 622 to the primary GNN model 626B. Further, the processor 204 may apply the primary GNN model 626B on the fed second test graph 622. In an embodiment, the processor 204 may be configured to generate a third set of node embeddings (e.g., the third set of node embeddings 628A) based on the primary GNN model 626B and the received second test graph 622. For example, based on the application of the primary GNN model 626B, the processor 204 may generate the third set of node embeddings 628A from the second test graph 622. In an example, the third set of node embeddings 628A may include a 1x256 vector for each respective node of the received second test graph 622.

The processor 204 may be configured to feed the (selected) second group of sample graphs 624 to the primary GNN model 626A. Further, the processor 204 may apply the primary GNN model 626A on the fed second group of sample graphs 624. In an embodiment, the processor 204 may be configured to generate a fourth set of node embeddings (e.g., the fourth set of node embeddings 628B) based on the primary GNN model 626A and the second group of sample graphs 624. For example, based on the application of the primary GNN model 626A, the processor 204 may generate the fourth set of node embeddings 628B from the second group of sample graphs 624. In an example, the fourth set of node embeddings 628B may include a 1x256 vector for each respective node of the second group of sample graphs 624.

The processor 204 may be configured to compare the third set of node embeddings 628A and the fourth set of node embeddings 628B. For example, the processor 204 may compare the 1x256 vector of each of the third set of node embeddings 628A with the 1x256 vector of each of the fourth set of node embeddings 628B. Further, the processor 204 may be configured to determine a set of similar graphs, from the (selected) second group of sample graphs 624, based on the comparison. The set of similar graphs may include a first similar graph with first embeddings and a second similar graph with second embeddings. A similarity score between the first embeddings and the second embeddings may be higher than a predetermined threshold. For example, the processor 204 may determine a distance measure between corresponding node embeddings from the third set of node embeddings 628A and the fourth set of node embeddings 628B. In an example, the distance measure may correspond to, but is not limited to, a cosine distance, a Euclidean distance, a dot product, or a Manhattan distance. In an example, the processor 204 may use a K-nearest neighborhood technique to determine the set of similar graphs, based on the determined distance measure.

In an embodiment, the processor 204 may replace K-nearest neighboring nodes for each test node (i.e., a node of the second test graph 622). In an example, the value of K may be set as a predetermined number, such as, "4". For example, top-K (or nearest K) nodes of the set of similar graphs, with respect to the second test graph 622 may be stacked with the respective test nodes of the second test graph 622 to obtain the stacked node embedding 630. The processor 204 may be further configured to determine a set of labels associated with the set of similar graphs. For example, the set of labels associated with the set of similar graphs may be known and may be stored in the database 106 and/or the memory 206. The processor 204 may determine the label associated with each node in the set of similar graphs from the database 106 and/or the memory 206. The processor 204 may be configured to determine a second task-specific prediction (e.g., the second task-specific prediction 632) for the second test graph 622, based on a majority voting of the set of labels. For example, in case K=3, the processor 204 may determine a label associated with each node of the top "3" nodes similar to a test node. Thereafter, the processor 204 may execute a majority voting operation on the labels determined for the top "3" nodes to determine a final label for the test node. The final label for the test node may correspond to the second task-specific prediction 632.

In an embodiment, the processor 204 may be configured to control rendering of fourth information including the second task-specific prediction 632. The processor 204 may generate the fourth information based on the second task-specific prediction 632. The processor 204 may render the fourth information on a display device (e.g., the display device 208A of FIG. 2) associated with the electronic device 102. In an embodiment, the second task-specific prediction 632 may correspond to at least one of a domain-incremental inference or a class-incremental inference, associated with the primary GNN model 110.

In an embodiment, the primary GNN model 320 (of FIG. 3) may correspond to a second set of GNN models associated with shared parameters. For example, the second set of GNN models may include the primary GNN model 626A and the primary GNN model 626B, which may share same parameters. In an embodiment, the generation of the third set of node embeddings 628A may be further based on an application of a first GNN model (e.g., the primary GNN model 626B) from the second set of GNN models on the received second test graph 622. In an embodiment, the generation of the fourth set of node embeddings 628B may be further based on an application of a second GNN model (e.g., the primary GNN model 626A) from the second set of GNN models on a corresponding graph from the (selected) second group of sample graphs 624.

It should be noted that the scenarios 600A and 600B of FIG. 6A and 6B, respectively, are for exemplary purpose and should not be construed to limit the scope of the disclosure.

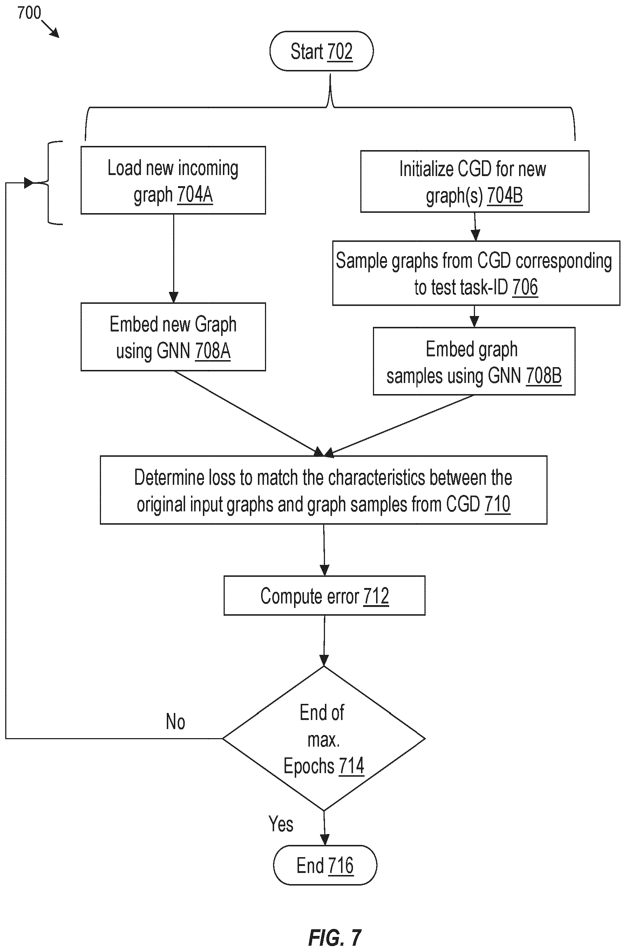

FIG. 7 is a diagram that illustrates a flowchart of an example method for creation of a condensed graph distribution (CGD) of a new incoming graph, in accordance with an embodiment of the disclosure. FIG. 7 is described in conjunction with elements from FIG. 1, FIG. 2, FIG. 3, FIG. 4A, FIG. 4B, FIG. 5A, FIG. 5B, FIG. 6A, and FIG. 6B. With reference to FIG. 7, there is shown a flowchart 700. The method illustrated in the flowchart 700 may start at 702 and may be performed by any suitable system, apparatus, or device, such as, by the example electronic device 102 of FIG. 1, or the processor 204 of FIG. 2. Although illustrated with discrete blocks, the steps and operations associated with at least one block of the flowchart 700 may be divided into additional blocks, combined into fewer blocks, or eliminated, depending on the particular implementation.

The flowchart 700 may start at block 702 and proceed to blocks 704A and 704B. At block 704A, a new incoming graph may be loaded. In an embodiment, the processor 204 may be configured to load a new incoming graph. For example, processor 204 may receive the first graph 302A (i.e., the new incoming graph) associated with the firsttask (i.e., a new task associated with the new incoming graph). The first graph 302A may be loaded in the memory 206. Details of loading of the new incoming graph are further provided, for example, in FIG. 3 (at 324 and 326).

At block 704B, a CGD may be initialized for new graph(s). In an embodiment, the processor 204 may be configured to initialize the CGD for the new graph(s), such as, the first graph 302A. In an example, the processor 204 may initialize the CGD based on a Gaussian distribution (e.g., a normal distribution) with predetermined parameters (e.g., zero mean and unit variance). Details of the initialization of the CGD are further provided, for example, in FIG. 3 (at 328).

At block 706, graphs may be sampled from a CGD corresponding to a test task-ID. In an embodiment, the processor 204 may be configured to sample graphs from the respective CGDs corresponding to the test task-ID. Graph samples may thereby be determined. In an example, the processor 204 may select the set of sample graphs 308 from the set of CGDs 306, based on a random sampling technique. In an embodiment, the test task-ID may correspond to a task-ID associated with the first task corresponding to the first graph 116. Details of the sampling of the graphs are further provided, for example, in FIG. 3 (at 328).

At block 708A, the new graph may be embedded using GNN. In an embodiment, the processor 204 may be configured to embed the new graph (i.e., the new incoming graph, such as, the first graph 302A) using the GNN (e.g., the one or more auxiliary GNN models 310). In an example, the processor 204 may feed the first graph 302A to the one or more auxiliary GNN models 310 and apply the one or more auxiliary GNN models 310 on the fed first graph 302A to determine embeddings associated with the first graph 302A. The embeddings associated with the first graph 302A may correspond to a first numerical vector associated with each node of the first graph 302A. Details of the determination of the embeddings of the new graph are further provided, for example, in FIG. 3 (at 328).

At block 708B, the graph (i.e., the graph samples) may be embedded using the GNN. In an embodiment, the processor 204 may be configured to embed the graph samples (e.g., the set of sample graphs 308) using the GNN (e.g., the one or more auxiliary GNN models 310). In an example, the processor 204 may feed the set of sample graphs 308 to the one or more auxiliary GNN models 310 and apply the one or more auxiliary GNN models 310 on the fed set of sample graphs 308 to determine embeddings associated with the set of sample graphs 308. The embeddings associated with the set of sample graphs 308 may correspond to a second numerical vector associated with each node of the set of sample graphs 308. Details of the determination of the embeddings of the sample graphs are further provided, for example, in FIG. 3 (at 328).

At block 710, a loss may be determined to match characteristics between the original input graph(s) (i.e., the new incoming graph) and the graph samples from the CGDs. In an embodiment, the processor 204 may be configured to determine the loss to match the characteristics between the original input graph(s) (e.g., the first graph 302A) and the graph samples (e.g., the set of sample graphs 308) from the CGDs (e.g., the set of CGD 306). In an example, the embeddings associated with the first graph 302A may correspond to the first numerical vector, which may correspond to features associated with the first graph 302A. Further, the embeddings associated with the set of sample graphs 308 may correspond to the second numerical vector, which may correspond to features associated with the set of sample graphs 308. The processor 204 may determine a distance metric between the first numerical vector and the second numerical vector to determine the loss associated with feature-matching between the first graph 302A and the set of sample graphs 308. Details of the determination of the loss are further provided, for example, in FIG. 3 (at 328).

At block 712, an error may be computed. In an embodiment, the processor 204 may be configured to compute an error associated with the GNN (e.g., the one or more auxiliary GNN models 310), based on the determined loss associated with the feature-matching between the first graph 302A and the set of sample graphs 308. To match the characteristics between the first graph 302A and the set of sample graphs 308, the processor 204 may determine first embeddings for the first graph 302A and second embeddings for each of the set of sample graphs 308. The processor 204 may determine a distance or similarity between the first embeddings and the second embeddings to match characteristics between the first graph 302A and the set of sample graphs 308. Thus, the loss 312 (i.e., the error) may be determined based on an application of the one or more auxiliary GNN models 310 on the first graph 302A and the set of sample graphs 308. For example, the loss 312 (i.e., the error) may be determined based on a squared-error loss associated with an output (e.g., a measure of difference between the first embeddings and the second embeddings) of the one or more auxiliary GNN models 310. The squared-error loss may increase quadratically with difference between expected (e.g., the values associated with each sample graph) versus actual values (e.g., the values associated with the first graph 302A). The computed error (e.g., the loss 312) may be used to train/fine-tune the one or more auxiliary GNN models 310 in prediction of a CGD associated with a new incoming graph.

At block 714, a check may be performed to determine whether a maximum number of epochs have been completed. In an embodiment, the processor 204 may be configured to determine whether the maximum number of epochs of the training/fine-tuning process of the one or more auxiliary GNN models 310 have been completed. In an example, the maximum number of epochs may be a predetermined number, e.g., "1000". In another example, the maximum number of epochs may be received as a user-input. In case the maximum number of epochs have not yet been reached, control may pass to blocks 704A and 704B. Otherwise, control may pass to end, at block 716.

Although the flowchart 700 is illustrated as discrete operations, such as 704A, 704B, 706, 708A, 708B, 710, 712, and 714, the disclosure is not so limited. However, in certain embodiments, such discrete operations may be further divided into additional operations, combined into fewer operations, or eliminated, depending on the particular implementation without detracting from the essence of the disclosed embodiments.

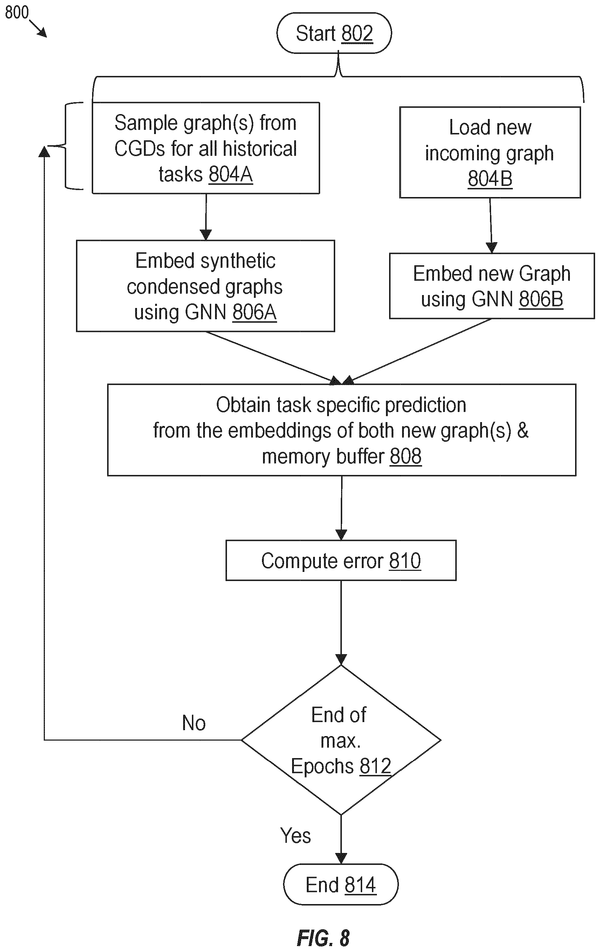

FIG. 8 is a diagram that illustrates a flowchart of an example method for a Graph Neural Network (GNN) update, in accordance with an embodiment of the disclosure. FIG. 8 is described in conjunction with elements from FIG. 1, FIG. 2, FIG. 3, FIG. 4A, FIG. 4B, FIG. 5A, FIG. 5B, FIG. 6A, FIG. 6B, and FIG. 7. With reference to FIG. 8, there is shown a flowchart 800. The method illustrated in the flowchart 800 may start at 802 and may be performed by any suitable system, apparatus, or device, such as, by the example electronic device 102 of FIG. 1, or the processor 204 of FIG. 2. Although illustrated with discrete blocks, the steps and operations associated with at least one block of the flowchart 800 may be divided into additional blocks, combined into fewer blocks, or eliminated, depending on the particular implementation.

The flowchart 800 may start at block 802 and proceed to blocks 804A and 804B. At block 804A, graphs may be sampled from CGDs for all historical tasks. In an embodiment, the processor 204 may be configured to sample graphs from the CGDs for all the historical tasks. Thereby, a plurality of sample graphs may be obtained. In an example, the processor 204 may select the plurality of sample graphs 318A, 318B, ...and 318T from the set of CGDs 316A, 316B, ...and 316T, based on a random sampling technique. In the above example, the historical tasks may include tasks "1", "2",... and "t". The set of CGDs 316A, 316B, ...and 316T may be retrieved from the memory buffer 304 (e.g., the stochastic memory buffer 114). Details of the sampling of the graphs are further provided, for example, in FIG. 3 (at 334).

At block 804B, a new incoming graph may be loaded. In an embodiment, the processor 204 may be configured to load a new incoming graph. For example, processor 204 may receive the first graph 302A (i.e., the new incoming graph) associated with the firsttask (i.e., a new task associated with the new incoming graph). The first graph 302A may be loaded in the memory 206. Details of loading of the new incoming graph are further provided, for example, in FIG. 3 (at 324 and 326).

At block 806A, synthetic condensed graphs (i.e., the plurality of sample graphs) may be embedded using a GNN. In an embodiment, the processor 204 may be configured to embed the synthetic condensed graphs (i.e., the plurality of sample graphs) using the GNN (e.g., the primary GNN model 320). In an example, the processor 204 may feed the plurality of sample graphs 318A, 318B, ...and 318T to the primary GNN model 320 and apply the primary GNN model 320 on the fed plurality of sample graphs 318A, 318B, ...and 318T. Based on the application of the primary GNN model 320, embeddings associated with the plurality of sample graphs 318A, 318B, ...and 318T may be determined. The determined embeddings associated with the plurality of sample graphs 318A, 318B, ...and 318T may correspond to a third numerical vector associated with each node of the plurality of sample graphs 318A, 318B, ...and 318T. Details of the determination of the embeddings of the synthetic condensed graphs are further provided, for example, in FIG. 3 (at 334).

At block 806B, the new graph may be embedded using the GNN. In an embodiment, the processor 204 may be configured to embed the new graph (i.e., the new incoming graph, such as, the first graph 302A) using the GNN (e.g., the primary GNN model 320). In an example, the processor 204 may feed the first graph 302A to the primary GNN model 320 and apply the primary GNN model 320 on the fed first graph 302A to determine embeddings associated with the first graph 302A. The embeddings associated with the first graph 302A may correspond to a fourth numerical vector associated with each node of the first graph 302A. Details of the determination of the embeddings of the new graph are further provided, for example, in FIG. 3 (at 334).

At block 808, a task-specific prediction may be obtained from the embeddings of both the new graph(s) and the memory buffer 304. In an embodiment, the processor 204 may be configured to obtain the task-specific prediction from the embeddings of both the new graph(s). In an example, the processor 204 may determine the task-specific prediction from node embeddings associated with the first graph 302A and node embeddings associated with the plurality of sample graphs 318A, 318B, ...and 318T (that may be sampled from the memory buffer 304). Details of the determination of task-specific prediction are further provided, for example, in FIG. 3 (at 334).

At block 810, an error may be computed. In an embodiment, the processor 204 may be configured to compute an error associated with the GNN (e.g., the primary GNN model 320), based on the obtained task-specific prediction. For example, the error (e.g., the first loss) may be determined based on a squared-error loss associated with an output (e.g., a measure of difference between embeddings of the first graph 302A and embeddings of each of the plurality of sample graphs) of the primary GNN model 320. The squared-error loss may increase quadratically with difference between expected (e.g., the values associated with each sample graph) versus actual values (e.g., the values associated with the first graph 302A). The primary GNN model 320 (i.e., "GNN^{t}") may be configured to generate the prediction result 322 associated with a prediction task (e.g., a downstream prediction task), based on the determined error (i.e., the first loss). That is, the computed error (i.e., the first loss) may be used to train/fine-tune the primary GNN model 320 (i.e., "GNN^{t}") to make predictions associated with the task "t" for improved performance on prediction tasks.

At block 812, a check may be performed to determine whether a maximum number of epochs have been completed. In an embodiment, the processor 204 may be configured to determine whether the maximum number of epochs of the training/fine-tuning process of the primary GNN model 320 have been completed. In an example, the maximum number of epochs may be a predetermined number, e.g., "1000". In another example, the maximum number of epochs may be received as a user-input. In case the maximum number of epochs have not yet been reached, control may pass to blocks 804A and 804B. Otherwise, control may pass to end, at block 814.

Although the flowchart 800 is illustrated as discrete operations, such as 804A, 804B, 806A, 806B, 808, 810, and 812, the disclosure is not so limited. However, in certain embodiments, such discrete operations may be further divided into additional operations, combined into fewer operations, or eliminated, depending on the particular implementation without detracting from the essence of the disclosed embodiments.

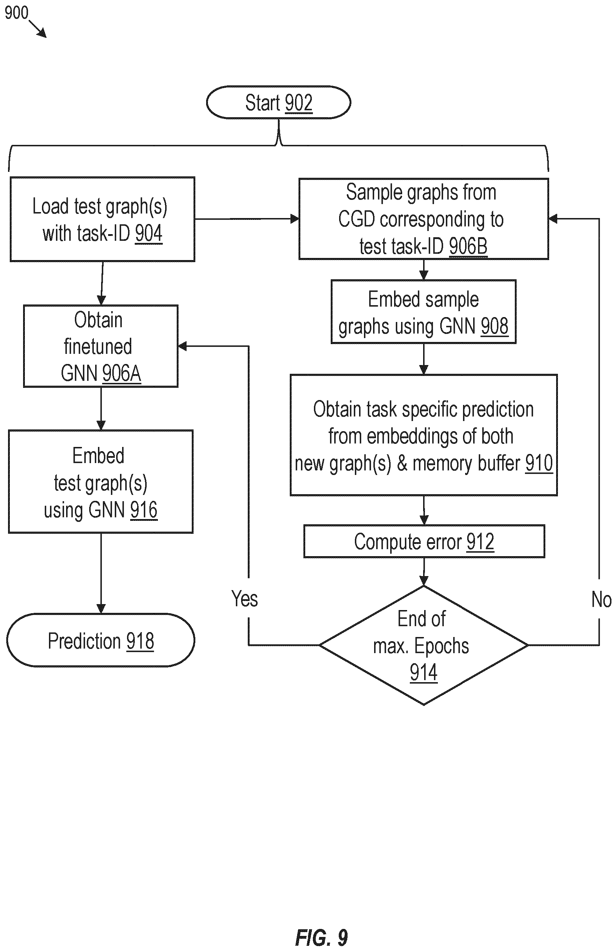

FIG. 9 is a diagram that illustrates a flowchart of an example method for determination of an inference (e.g., a node label inference) from a primary graph neural network (GNN) model in a task-incremental setting, in accordance with an embodiment of the disclosure. FIG. 9 is described in conjunction with elements from FIG. 1, FIG. 2, FIG. 3, FIG. 4A, FIG. 4B, FIG. 5A, FIG. 5B, FIG. 6A, FIG. 6B, FIG. 7, and FIG. 8. With reference to FIG. 9, there is shown a flowchart 900. The method illustrated in the flowchart 900 may start at 902 and may be performed by any suitable system, apparatus, or device, such as, by the example electronic device 102 of FIG. 1, or the processor 204 of FIG. 2. Although illustrated with discrete blocks, the steps and operations associated with at least one block of the flowchart 900 may be divided into additional blocks, combined into fewer blocks, or eliminated, depending on the particular implementation.

The flowchart 900 may start at block 902 and proceed to block 904A. At block 904A, the test graph(s) with a task-ID may be loaded. In an embodiment, the processor 204 may be configured to load the test graph(s) with a task-ID (e.g., a task-ID "2"). For example, processor 204 may receive the first test graph 602 (e.g., a graph "G₂") associated with a certain task-ID, such as, the task ID "2". The first test graph 602 may be loaded in the memory 206. Details of loading of the test graph are further provided, for example, in FIG. 4A and FIG. 6A.

At block 906B, graphs from CGD corresponding to the test task-ID may be sampled. In an embodiment, the processor 204 may be configured to sample graphs from the CGD corresponding to the test task-ID. For example, in case the task-ID of the first test graph 602 is "2", the processor 204 may select the first group of sample graphs 604 from the set of CGDs 118 corresponding to the task-ID "2". Details of the sampling of the graphs are further provided, for example, in FIG. 4A and FIG. 6A.

At block 908, the sample graphs may be embedded using a GNN. In an embodiment, the processor 204 may be configured to embed the sample graphs (e.g., the first group of sample graphs 604) using the GNN (e.g., the primary GNN model 608). In an example, the processor 204 may feed the sample graphs (e.g., the first group of sample graphs 604) to the primary GNN model 608 and apply the primary GNN model 608 on the fed first group of sample graphs 604. Based on the application of the primary GNN model 608, embeddings associated with the first group of sample graphs 604 may be determined. Each of the determined embeddings may correspond to a numerical vector associated with a corresponding node of the first group of sample graphs 604. Details of the determination of the embeddings of the sample graphs are further provided, for example, in FIG. 4A and FIG. 6A.

At block 910, a task-specific prediction may be obtained from the embeddings of both the new graph(s) and the memory buffer. In an embodiment, the processor 204 may be configured to obtain the task-specific prediction from the embeddings of both the new graph(s) (i.e., the first test graph 602) and the memory buffer 304 (i.e., the stochastic memory buffer 114, which may include the CGDs of all historical tasks). For example, with reference to FIG. 6A, at 606, the processor 204 may be configured to execute a memory extraction operation in which the first test graph 602 and the first group of sample graphs 604 may be extracted and fed as inputs to the primary GNN model 608. The processor 204 may apply the primary GNN model 608 on the fed inputs and obtain embeddings (such as, the first set of node embeddings 610) of the first test graph 602 (i.e., the new graph(s)) and the first group of sample graphs 604 (i.e., the graphs sampled and extracted from the memory buffer 304). The processor 204 may determine the task-specific prediction, such as, the first task-specific prediction 612, based on the obtained embeddings, such as, the first set of node embeddings 610. Details of the determination of the task-specific prediction are further provided, for example, in FIG. 6A.

At block 912, an error may be computed. In an embodiment, the processor 204 may be configured to compute an error associated with the GNN (e.g., the primary GNN model 608), based on the obtained task-specific prediction. In an embodiment, the computed error may correspond to the first loss including a squared-error loss associated with an output (e.g., a measure of difference between embeddings of the first graph 302A and embeddings of each of the plurality of sample graphs) of the primary GNN model 320. The squared-error loss may increase quadratically with difference between expected (e.g., the values associated with each sample graph) versus actual values (e.g., the values associated with the first graph 302A). The computed error may be used to train/fine-tune the primary GNN model 608 and update the network associated with the primary GNN model 608 for improved performance on prediction tasks.

At block 914, a check may be performed to determine whether a maximum number of epochs have been completed. In an embodiment, the processor 204 may be configured to determine whether the maximum number of epochs of the training/fine-tuning process of the primary GNN model 608 have been completed. In an example, the maximum number of epochs may be a predetermined number, e.g., "1000". In another example, the maximum number of epochs may be received as a user-input. In case the maximum number of epochs have not yet been reached, control may pass to block 906B. Otherwise, control may pass to block 906A.

At block 906A, the fine-tuned GNN may be obtained. In an embodiment, the processor 204 may be configured to obtain the fine-tuned GNN (e.g., the fine-tuned GNN model 616) from the primary GNN model 608. In an embodiment, the processor 204 may determine a third loss (e.g., the third loss 614) associated with the primary GNN model 608 based on the first group of sample graphs 604. The fine-tuned GNN model 616 may be obtained based on the determined third loss 614. For example, the processor 204 may fine-tune the primary GNN model 608 to obtain the fine-tuned GNN model 616, based on techniques, such as, but not limited to, a gradient descent technique, a local search technique, a global search technique, or a transfer learning technique. Details of fine-tuning of the GNN model are further provided in, for example, in FIG. 6A.

At block 916, the test graph(s) may be embedded using the fine-tuned GNN. In an embodiment, the processor 204 may be configured to embed the test graph(s) (e.g., the first test graph 602) using the fine-tuned GNN (e.g., the fine-tuned GNN model 616). In an embodiment, the processor 204 may be configured to generate a second set of node embeddings (e.g., the second set of node embeddings 618) based on the generated fine-tuned GNN model 616 and the received first test graph 602. For example, the processor 204 may feed the received firsttestgraph 602 to the fine-tuned GNN model 616. Further, the processor 204 may apply the fine-tuned GNN model 616 on the received first test graph 602 to generate the second set of node embeddings 618. In an example, the second set of node embeddings 618 may include a numerical vector for each respective node of the received firsttestgraph 602. Details of the embedding of the test graph(s) are further provided, for example, in FIG. 6A.

At block 918, a prediction may be obtained. In an embodiment, the processor 204 may be configured to obtain a prediction result based on the embeddings of the test graph(s). For example, the processor 204 may determine the downstream-task prediction 620 for the received first test graph 602 based on the generated second set of node embeddings 618 associated with the first test graph 602. In an embodiment, each of the first task-specific prediction 612 and the downstream-task prediction 620 may correspond to a task-incremental inference associated with the primary GNN model 608. For example, an inference of a node label for the first test graph 602 may be determined as a downstream-task prediction 620. Control may pass to end.

Although the flowchart 900 is illustrated as discrete operations, such as 904A, 906A, 906B, 908, 910, 912, 914, 916, and 918, the disclosure is not so limited. However, in certain embodiments, such discrete operations may be further divided into additional operations, combined into fewer operations, or eliminated, depending on the particular implementation without detracting from the essence of the disclosed embodiments.

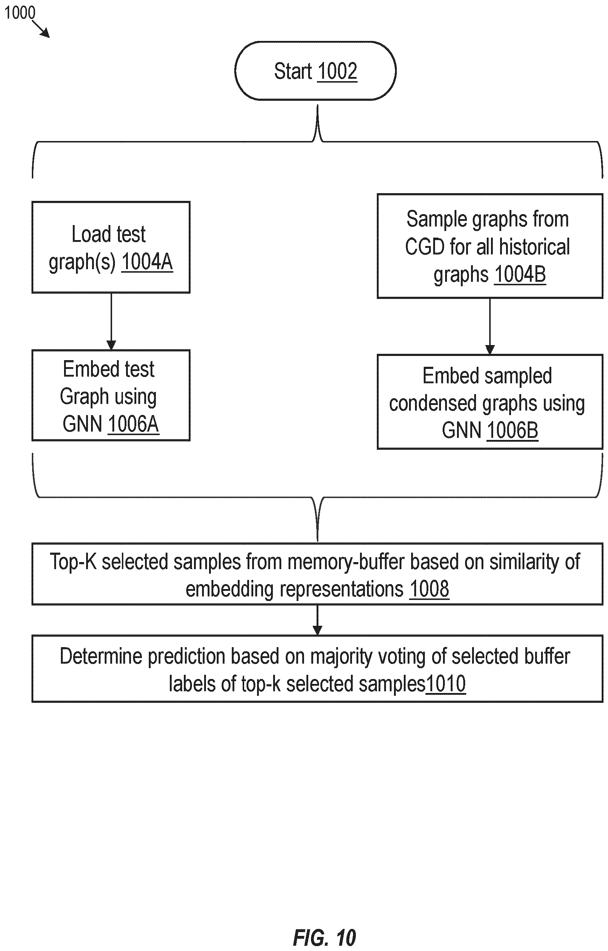

FIG. 10 is a diagram that illustrates a flowchart of an example method for determination of an inference (e.g., a node label inference) from a primary graph neural network (GNN) model in a domain-incremental setting or a class-incremental setting, in accordance with an embodiment of the disclosure. FIG. 10 is described in conjunction with elements from FIG. 1, FIG. 2, FIG. 3, FIG. 4A, FIG. 4B, FIG. 5A, FIG. 5B, FIG. 6A, FIG. 6B, FIG. 7, FIG. 8, and FIG. 9. With reference to FIG. 10, there is shown a flowchart 1000. The method illustrated in the flowchart 1000 may start at 1002 and may be performed by any suitable system, apparatus, or device, such as, by the example electronic device 102 of FIG. 1, or the processor 204 of FIG. 2. Although illustrated with discrete blocks, the steps and operations associated with at least one block of the flowchart 1000 may be divided into additional blocks, combined into fewer blocks, or eliminated, depending on the particular implementation.

The flowchart 1000 may start at block 1002 and proceed to blocks 1004A and 1004B. At block 1004A, the test graph(s) may be loaded. In an embodiment, the processor 204 may be configured to load the test graph(s). The test graph(s) may be associated with an anonymous task-ID. In an embodiment, the task-ID associated with the test graph(s) may either be unknown or may not be received along with the test graph(s). For example, processor 204 may receive the second test graph 622 with unknown task-ID. The received second test graph 622 may be loaded in the memory 206. Details of loading of the test graph are further provided, for example, in FIG. 4B and FIG. 6B.

At block 1004B, graphs from CGDs of all historical graphs/tasks may be sampled. In an embodiment, the processor 204 may be configured to sample graphs from the CGD of all historical graphs/tasks to obtain sampled condensed graphs. For example, in case the memory buffer 304 includes CGDs of "100" historical graphs/tasks, the processor 204 may select sample graphs (e.g., the second group of sample graphs 624). Details of the sampling of the graphs are further provided, for example, in FIG. 4B and FIG. 6B.

At block 1006A, the test graph(s) may be embedded using a GNN. In an embodiment, the processor 204 may be configured to embed the test graph(s) (e.g., the second test graph 622) using the GNN (e.g., the primary GNN model 626B). In an embodiment, the processor 204 may be configured to generate a third set of node embeddings (e.g., the third set of node embeddings 628B) based on the primary GNN model 626B and the second test graph 622. For example, the processor 204 may feed the second test graph 622 to the primary GNN model 626B. Further, the processor 204 may apply the primary GNN model 626B on the received second test graph 622 to generate the third set of node embeddings 628B. In an example, the third set of node embeddings 628B may include a numerical vector for each respective node of the received second test graph 622. Details of the embedding of the test graph(s) are further provided, for example, in FIG. 6B.

At 1006B, the sampled condensed graphs are embedded using the GNN. In an embodiment, the processor 204 may be configured to embed the sampled condensed graphs (e.g., the second group of sample graphs 624) using the GNN (e.g., the primary GNN model 626A). In an example, the processor 204 may feed the sample graphs (e.g., the second group of sample graphs 624) to the primary GNN model 626A and apply the primary GNN model 626A on the fed second group of sample graphs 624. Based on the application of the primary GNN model 626A, embeddings associated with the second group of sample graphs 624 may be determined. Each of the determined embeddings may correspond to a numerical vector associated with a corresponding node of the second group of sample graphs 624. Details of the determination of the embeddings of the sample graphs are further provided, for example, in FIG. 4B and FIG. 6B.

At 1008, top-K samples may be from the memory buffer, based on similarity of embedding representations. In an embodiment, the processor 204 may be configured to select the top-K samples from the memory buffer 304, based on the similarity of the embedding representations associated with the node embeddings of the received second test graph 622 and the node embeddings of the sampled graphs 624 (e.g., the second group of sample graphs 624). For example, with reference to FIG. 4B, the top similar sample graphs (denoted as the top-K samples 424) may be determined based on a similarity between the first latent representations 420 (i.e., node embeddings of the sampled graphs 414) and the second latent representations 422 (i.e., node embeddings of the test-graph 416). Details of the selection of the top-k samples from the memory buffer are provided further, for example, in FIG. 4B and FIG. 6B.

At 1010, a prediction is determined based on a majority voting of buffer labels of the top-k samples. In an embodiment, the processor 204 may be configured to determine the prediction (e.g., the second prediction result 426) based on the top-K samples 424. For example, the processor 204 may execute a majority voting operation on labels associated with the top-K samples 424 in the memory buffer 304 (e.g., the stochastic memory buffer 114) to determine a prediction label (i.e., the second prediction result 426) associated with the test-graph 416. A prediction result associated with a domain-incremental setting or a class-incremental setting (with an unknown task ID of the test-graph 416) may thus be obtained. Details of the determination of the prediction are further provided, for example, in FIG. 4B and FIG. 6B. Control may pass to end.

Although the flowchart 1000 is illustrated as discrete operations, such as 1004A, 1004B, 1006A, 1006B, 1008, and 1010, the disclosure is not so limited. However, in certain embodiments, such discrete operations may be further divided into additional operations, combined into fewer operations, or eliminated, depending on the particular implementation without detracting from the essence of the disclosed embodiments.

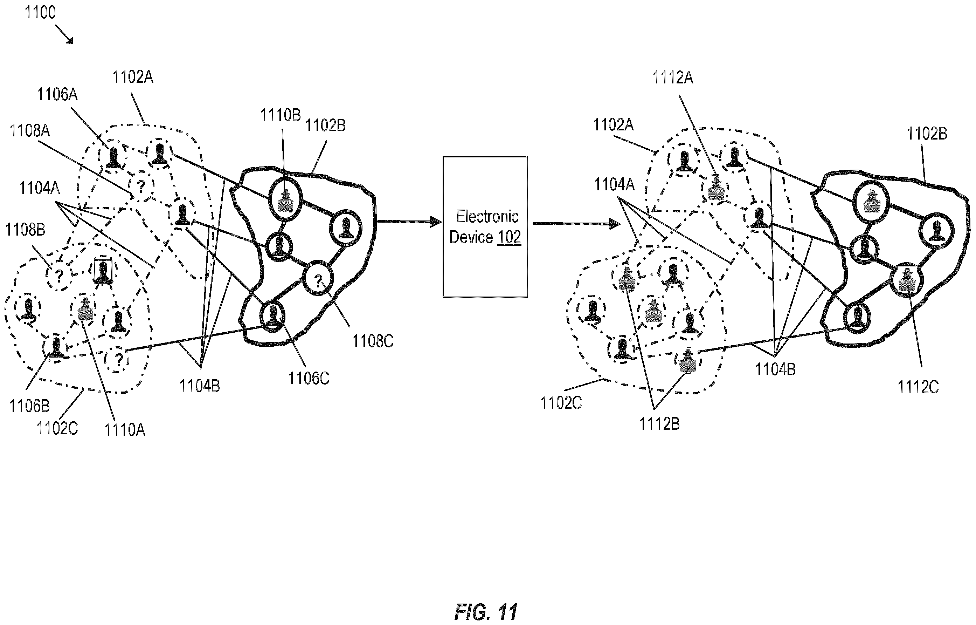

FIG. 11 is a diagram that illustrates an exemplary scenario of malicious activity detection in a social network, using the electronic device of FIG. 1, in accordance with an embodiment of the disclosure. FIG. 11 is described in conjunction with elements from FIG. 1, FIG. 2, FIG. 3, FIG. 4A, FIG. 4B, FIG. 5A, FIG. 5B, FIG. 6A, FIG. 6B, FIG. 7, FIG. 8, FIG. 9, and FIG. 10. With reference to FIG. 11, there is shown an exemplary scenario 1100 of malicious activity detection in a social network, using the electronic device 102. The electronic device 102 may also be similarly used to detect fraud associated with a financial system or financial transactions.

The scenario 1100 shows a time evolving graph associated with social network users. The time evolving graph may indicate evolving user connections in a social network of the user. In an example, the time evolving graph may correspond to a graph 1102C (associated with a time instance "1"), a graph 1102A (associated with a time instance "2"), and a graph 1102B (associated with a time instance "3"). The time instance "1" may be followed by the time instance "2", which may be further followed by the time instance "3". Each graph may correspond to a social network, at a certain time instance, between a set of users represented as nodes of the respective graph. The graph 1102C may include nodes, such as, a node 1106B, a node 1108B, and a node 1110A. The graph 1102A may include nodes, such as, a node 1106A and a node 1108A. The graph 1102B may include nodes, such as, a node 1106C, a node 1108C, and a node 1110B. Also shown in FIG. 11, the node 1108B of the graph 1102C may be associated with (which may be denoted by 1104A) nodes 1106A and 1108A of the graph 1102A. Further, various nodes of the graph 1102B may be associated with (which may be denoted by 1104B) certain nodes of (e.g., the nodes 1110B and 1106C) of the graph 1102C and the graph 1102A.

In an example, as shown in FIG. 11, a user associated with the node 1110A in the graph 1102C may correspond to a user associated with a malicious activity in the social network at the time instance "1". Further, a user associated with the node 1110B in the graph 1102B may also correspond to a user associated with a malicious activity at the time instance "3". Further, there are shown nodes associated with users, who may be new users of the social network. It may be unknown whether such users are involved in malicious activity. Examples of such new users may include, a user associated with the node 1108B in the graph 1102C, a user associated with the node 1108A in the graph 1102A, and a user associated with the node 1108C in the graph 1102B. In an embodiment, the graphs 1102A, 1102B, and 1102C may be input to the electronic device 102. Based on the input of the graphs 1102A, 1102B, and 1102C, the processor 204 of the electronic device 102 may be configured to determine a prediction (using, for example, the primary GNN model 110) whether a given user of the social network may be involved in a malicious activity. In an example, a newly added unknown user may be involved in malicious activities. Also, any current user may be involved in malicious activities. For example, as shown in FIG. 11, users associated with the nodes 1112B in the graph 1102C, a user associated with the node 1112A in the graph 1102A, and a user associated with the node 1112C in the graph 1102B may be determined to be associated with malicious activities in the social network. Details of the determination of the prediction are further provided, for example, in FIGs. 3, 4A, 4B, 5A, 5B, 6A, and 6B.

It should be noted that the scenario 1100 of FIG. 11 is for exemplary purpose and should not be construed to limit the scope of the disclosure.

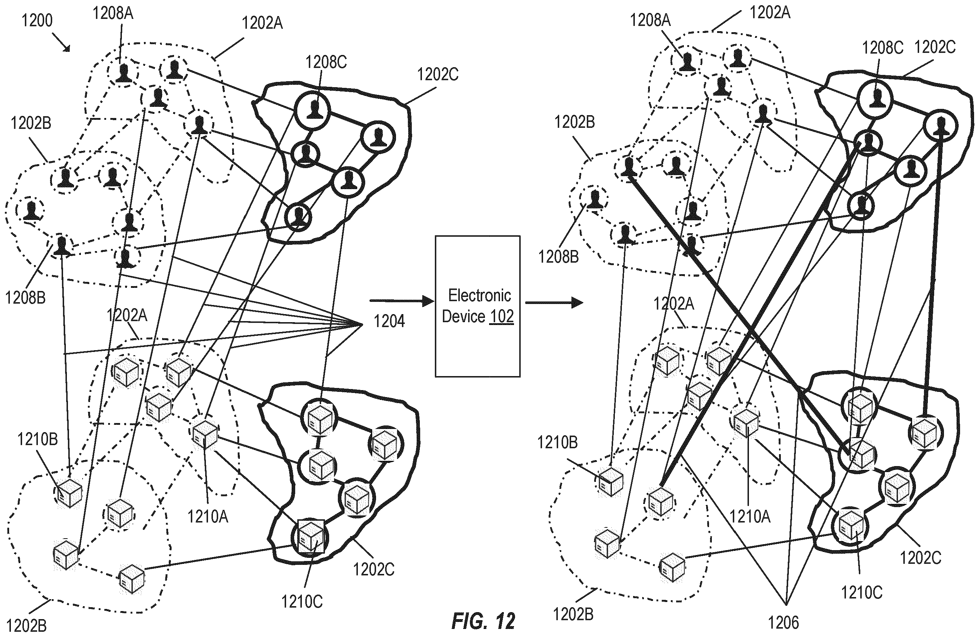

FIG. 12 is a diagram that illustrates an exemplary scenario of implementation of a recommendation system, using the electronic device of FIG. 1, in accordance with an embodiment of the disclosure. FIG. 12 is described in conjunction with elements from FIG. 1, FIG. 2, FIG. 3, FIG. 4A, FIG. 4B, FIG. 5A, FIG. 5B, FIG. 6A, FIG. 6B, FIG. 7, FIG. 8, FIG. 9, FIG. 10, and FIG. 11. With reference to FIG. 12, there is shown an exemplary scenario 1200 of implementation of a recommendation system, using the electronic device 102. For example, the recommendation system may be used for selection of advertisements for users or product recommendation in an e-commerce platform. The electronic device 102 may also be similarly used to recommend content (such as, songs, videos, or movies) in an over-the-top (OTT) platform.

The scenario 1200 shows time evolving user-product graphs, such as, a first set of graphs 1202A, a second set of graphs 1202B, and a third set of graphs 1202C. The time evolving user-product graphs may be associated with a network of users, a network of products, and interaction between the users and the products (based on an association between the network of users and the network of products). In an example, the first set of graphs 1202A may be associated with a time instance "1", the second set of graphs 1202B may be associated with a time instance "2", and the third set of graphs 1202C may be associated with a time instance "3". The time instance "1" may be followed by the time instance "2", which may be further followed by the time instance "3". The first set of graphs 1202A may include a user graph including nodes for users (such as, a user 1208A) and a product graph including nodes for products (such as, a product 1210A). Similarly, the second set of graphs 1202B may include a user graph including nodes for users (such as, a user 1208B) and a product graph including nodes for products (such as, a product 1210B). Further, the third set of graphs 1202C may include a user graph including nodes for users (such as, a user 1208C) and a product graph including nodes for products (such as, a product 1210C). As shown in FIG. 12, associations between the user graphs and the product graphs are denoted by 1204. Also, nodes within each user-graph may be associated with one another, based on associations (e.g., social network connectivity) between respective users. Similarly, nodes within each product-graph may be associated with one another, based on associations (e.g., product similarity) between respective products. In addition, there may be association between user-nodes of two user-graphs and also between product-nodes of two product-graphs, as shown in FIG. 12.

In an embodiment, the time evolving user-product graphs 1202A, 1202B, and 1202C may be input to the electronic device 102. Based on the input time evolving user-product graphs 1202A, 1202B, and 1202C, the processor 204 of the electronic device 102 may determine a prediction (using, for example, the primary GNN model 110) including a set of associations between users and products. The determined prediction may correspond to an output of a recommendation system that may be configured to recommend users for a certain product or recommend products for a particular user. In an example, as shown in FIG. 12, the set of associations (which may be denoted by 1206) may be determined between nodes associated with the user graphs and nodes associated with the product graphs, from the time evolving user-product graphs 1202A, 1202B, and 1202C. Details of the determination of the prediction are further provided, for example, in FIGs. 3, 4A, 4B, 5A, 5B, 6A, and 6B.

It should be noted that the scenario 1200 of FIG. 12 is for exemplary purpose and should not be construed to limit the scope of the disclosure.

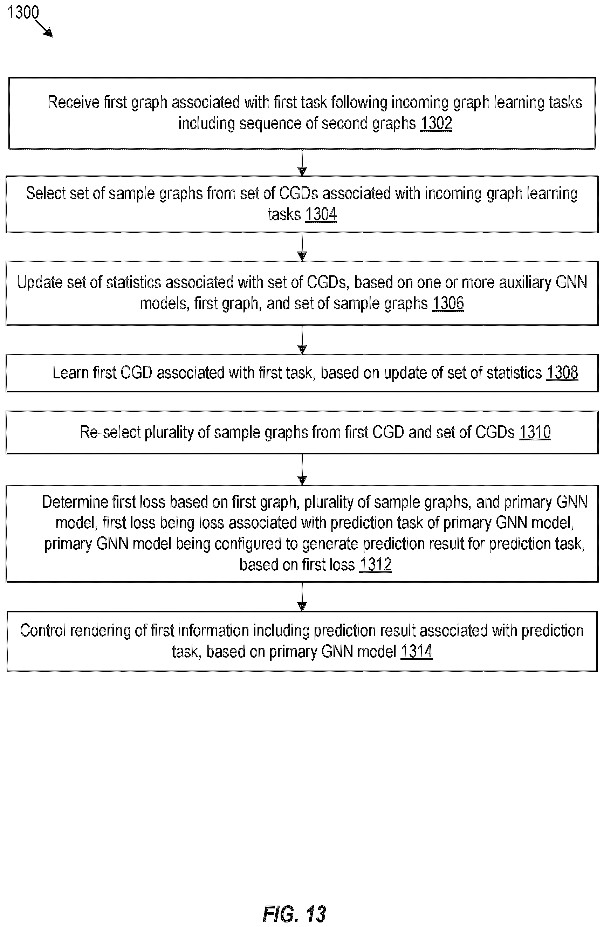

FIG. 13 is a diagram that illustrates a flowchart of an example method for condensed graph distribution (CGD)-based graph continual learning, in accordance with an embodiment of the disclosure. FIG. 13 is described in conjunction with elements from FIG. 1, FIG. 2, FIG. 3, FIG. 4A, FIG. 4B, FIG. 5A, FIG. 5B, FIG. 6A, FIG. 6B, FIG. 7, FIG. 8, FIG. 9, FIG. 10, FIG. 11, and FIG. 12. With reference to FIG. 13, there is shown a flowchart 1300. The method illustrated in the flowchart 1300 may start at 1302 and may be performed by any suitable system, apparatus, or device, such as, by the example electronic device 102 of FIG. 1, or the processor 204 of FIG. 2. Although illustrated with discrete blocks, the steps and operations associated with at least one block of the flowchart 1300 may be divided into additional blocks, combined into fewer blocks, or eliminated, depending on the particular implementation.

At block 1302, the first graph 302A associated with the first task following the incoming graph learning tasks including the sequence of second graphs 120 may be received. In an embodiment, the processor 204 may be configured to receive the first graph 302A associated with the first task following the incoming graph learning tasks including the sequence of second graphs 120. Details related to the reception of the first graph are described further, for example, in FIG. 3.

At block 1304, the set of sample graphs 308 may be selected from the set of CGDs 306 associated with the incoming graph learning tasks. In an embodiment, the processor 204 may be configured to select the set of sample graphs 308 from the set of CGDs 306 associated with the incoming graph learning tasks. Details related to the selection of the set of sample graphs are described further, for example, in FIG. 3.

At block 1306, the set of statistics associated with the set of CGDs 306 may be updated, based on the one or more auxiliary GNN models 310. In an embodiment, the processor 204 may be configured to update the set of statistics associated with the set of CGDs 306, based on the one or more auxiliary GNN models 310. Details related to the update of the set of statistics are described further, for example, in FIG. 3.

At block 1308, the first CGD associated with the first task may be learned, based on the update of the set of statistics. In an embodiment, the processor 204 may be configured to learn the first CGD associated with the first task, based on the update of the set of statistics. Details related to the learning of the first CGD are described further, for example, in FIG. 3.

At block 1310, the plurality of sample graphs (e.g., the sample graphs 318A, 318B, ...and 318T) may be re-selected from the first CGD and the set of CGDs 306. In an embodiment, the processor 204 may be configured to re-select the plurality of sample graphs 318A, 318B, ...and 318T from the first CGD and the set of CGDs 306. Details related to the re-selection of the plurality of sample graphs are described further, for example, in FIG. 3.

At block 1312, the first loss may be determined based on the first graph 302A, the plurality of sample graphs 318A, 318B, ...and 318T, and the primary GNN model 110. The first loss may correspond to a prediction error associated with a downstream prediction task of the primary GNN model 320. For example, the first loss may be determined based on a squared-error loss associated with an output (e.g., a measure of difference between embeddings of the first graph 302A and embeddings of each of the plurality of sample graphs) of the primary GNN model 320. In an embodiment, the processor 204 may be configured to determine the first loss based on the first graph 302A, the plurality of sample graphs 318A, 318B, ...and 318T, and the primary GNN model 110. The primary GNN model 320 may be configured to generate the prediction result 322 for downstream prediction task, based on the first loss. Details related to the determination of the first loss are described further, for example, in FIG. 3.

At block 1314, rendering of the first information including the prediction result 322 associated with the downstream prediction task may be controlled, based on the primary GNN model 320. In an embodiment, the processor 204 may be configured to control rendering of the first information including the generated prediction result 322 associated with the prediction task, based on the primary GNN model 320. For example, the processor 204 may generate the first information based on the generated prediction result 322. Further, the processor 204 may control rendering (e.g., display) of the generated first information on a display device (e.g., the display device 208A) associated with the electronic device 102. Control may pass to end.

Although the flowchart 1300 is illustrated as discrete operations, such as 1302, 1304, 1306, 1308, 1310, 1312, and 1314, the disclosure is not so limited. However, in certain embodiments, such discrete operations may be further divided into additional operations, combined into fewer operations, or eliminated, depending on the particular implementation without detracting from the essence of the disclosed embodiments.

Various embodiments of the disclosure may provide one or more non-transitory computer-readable storage media configured to store instructions that, in response to being executed, cause a system (such as the example electronic device 102) to perform operations. The operations may include receiving a first graph (e.g., the first graph 116) associated with a firsttask following incoming graph learning tasks including a sequence of second graphs (e.g., the sequence of second graphs 120). The operations may further include selecting a set of sample graphs from a set of condensed graph distributions (CGDs) (e.g., the set of CGDs 118) associated with the incoming graph learning tasks. The operations may further include updating a set of statistics associated with the set of CGDs 118, based on one or more auxiliary graph neural network (GNN) models (e.g., the one or more auxiliary GNN models 112), the first graph 116, and the set of sample graphs. The operations may further include learning a first CGD associated with the firsttask, based on the update of the set of statistics. The operations may further include re-selecting a plurality of sample graphs from the first CGD and the set of CGDs 118. The operations may further include determining a first loss based on the first graph 116, the plurality of sample graphs, and the primary GNN model 110. The first loss may correspond to a prediction error associated with a downstream prediction task of the primary GNN model. The primary GNN model 110 may be configured to generate a prediction result associated with the downstream prediction task, based on the first loss. The operations may further include controlling rendering of first information including the prediction result associated with the downstream prediction task, based on the primary GNN model 110.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, one of ordinary skill in the art will recognize that such recitations should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executed by a processor, comprising:
receiving a first graph associated with a first task following incoming graph learning tasks including a sequence of second graphs;
selecting a set of sample graphs from a set of condensed graph distributions (CGDs) associated with the incoming graph learning tasks;
updating a set of statistics associated with the set of CGDs, based on one or more auxiliary graph neural network (GNN) models, the first graph, and the set of sample graphs;
learning a first CGD associated with the first task, based on the update of the set of statistics;
re-selecting a plurality of sample graphs from the first CGD and the set of CGDs;
determining a first loss based on the first graph, the plurality of sample graphs, and a primary GNN model, the first loss corresponding to a prediction error associated with a downstream prediction task of the primary GNN model, the primary GNN model being configured to generate a prediction result for the downstream prediction task, based on the first loss; and
controlling rendering of first information including the prediction result associated with the downstream prediction task, based on the primary GNN model.

2. The method according to claim 1, further comprising:
extracting the set of CGDs associated with the incoming graph learning tasks from a stochastic memory buffer, based on the first graph, wherein
the selection of the set of sample graphs from the set of CGDs is based on the extraction of the set of CGDs from the stochastic memory buffer; and
storing the first CGD associated with the first task to the stochastic memory buffer, wherein
the plurality of sample graphs is re-selected from the stochastic memory buffer.

3. The method according to claim 1, further comprising:
determining a second loss associated with the one or more auxiliary GNN models, based on a feature-matching between the first graph and the set of sample graphs, wherein
the update of the set of statistics associated with the set of CGDs is further based on the second loss.

4. The method according to claim 1, further comprising:
initializing the primary GNN model based on a pre-trained GNN model associated with a second task preceding the first task in a timeline of the incoming graph learning tasks, wherein
the primary GNN model is configured to generate the prediction result further based on the initialization of the primary GNN model.

5. The method according to claim 1, wherein
the one or more auxiliary GNN models correspond to a first set of GNN models associated with shared parameters, and
the update of the set of statistics is further based on an application of a GNN model from the first set of GNN models on a corresponding graph from the first graph and the set of sample graphs.

6. The method according to claim 1, further comprising:
receiving a first test graph associated with a first task identifier (ID);
selecting a first group of sample graphs from the first CGD and the set of CGDs, based on the first task ID;
generating a first set of node embeddings based on the primary GNN model, the first test graph, and the first group of the sample graphs;
generating a first task-specific prediction associated with the first task ID, based on the first set of node embeddings; and
controlling rendering of second information including the first task-specific prediction.

7. The method according to claim 6, further comprising:
determining a third loss associated with the primary GNN model based on the first group of sample graphs;
generating a fine-tuned GNN model from the primary GNN model, based on the third loss;
generating a second set of node embeddings based on the fine-tuned GNN model and the first test graph;
generating a downstream-task prediction for the first test graph, based on the second set of node embeddings; and
controlling rendering of third information including the downstream-task prediction,
optionally wherein each of the first task-specific prediction and the downstream-task prediction corresponds to a task-incremental inference associated with the primary GNN model.

8. The method according to claim 1, further comprising:
receiving a second test graph associated with an anonymous task ID;
selecting a second group of sample graphs from the first CGD and the set of CGDs, based on a set of historical task IDs associated with the incoming graph learning tasks;
generating a third set of node embeddings based on the primary GNN model and the second test graph;
generating a fourth set of node embeddings based on the primary GNN model and the second group of sample graphs;
comparing the third set of node embeddings and the fourth set of node embeddings;
determining a set of similar graphs, from the second group of sample graphs, based on the comparison, the set of similar graphs including a first similar graph with first embeddings and a second similar graph with second embeddings, a similarity score between the first embeddings and the second embeddings being higher than a predetermined threshold;
determining a set of labels associated with the set of similar graphs;
determining a second task-specific prediction for the second test graph, based on a majority voting of the set of labels; and
controlling rendering of fourth information including the second task-specific prediction.

9. The method according to claim 8, wherein the second task-specific prediction corresponds to at least one of a domain-incremental inference or a class-incremental inference, associated with the primary GNN model,
optionally wherein:
the primary GNN model corresponds to a second set of GNN models associated with shared parameters;
the generation of the third set of node embeddings is further based on an application of a first GNN model from the second set of GNN models on the second test graph; and
the generation of the fourth set of node embeddings is further based on an application of a second GNN model from the second set of GNN models on a corresponding graph from the second group of sample graphs.

10. One or more non-transitory computer-readable storage media configured to store instructions that, in response to being executed, cause an electronic device associated with an encoder system to perform operations, the operations comprising:
receiving a first graph associated with a first task following incoming graph learning tasks including a sequence of second graphs;
selecting a set of sample graphs from a set of condensed graph distributions (CGDs) associated with the incoming graph learning tasks;
updating a set of statistics associated with the set of CGDs, based on one or more auxiliary graph neural network (GNN) models, the first graph, and the set of sample graphs;
learning a first CGD associated with the first task, based on the update of the set of statistics;
re-selecting a plurality of sample graphs from the first CGD and the set of CGDs;
determining a first loss based on the first graph, the plurality of sample graphs, and a primary GNN model, the first loss corresponding to a prediction error associated with a downstream prediction task of the primary GNN model, the primary GNN model being configured to generate a prediction result for the downstream prediction task, based on the first loss; and
controlling rendering of first information including the prediction result associated with the downstream prediction task, based on the primary GNN model.

11. The one or more non-transitory computer-readable storage media according to claim 10, the operations further comprising:
determining a second loss associated with the one or more auxiliary GNN models, based on a feature-matching between the first graph and the set of sample graphs, wherein the update of the set of statistics associated with the set of CGDs is further based on the second loss; or
initializing the primary GNN model based on a pre-trained GNN model associated with a second task preceding the first task in the timeline of the incoming graph learning tasks, wherein the primary GNN model is configured to generate the prediction result further based on the initialization of the primary GNN model.

12. The one or more non-transitory computer-readable storage media according to claim 10, the operations further comprising:
receiving a first test graph associated with a first task identifier (ID);
selecting a first group of sample graphs from the first CGD and the set of CGDs, based on the first task ID;
generating a first set of node embeddings based on the primary GNN model, the first test graph, and the first group of the sample graphs;
generating a first task-specific prediction associated with the first task ID, based on the first set of node embeddings; and
controlling rendering of second information including the first task-specific prediction.

13. The one or more non-transitory computer-readable storage media according to claim 12, the operations further comprising:
determining a third loss associated with the primary GNN model based on the first group of sample graphs;
generating a fine-tuned GNN model from the primary GNN model, based on the third loss;
generating a second set of node embeddings based on the fine-tuned GNN model and the first test graph;
generating a downstream-task prediction for the first test graph, based on the second set of node embeddings; and
controlling rendering of third information including the downstream-task prediction,
optionally wherein each of the first task-specific prediction and the downstream-task prediction corresponds to a task-incremental inference associated with the primary GNN model.

14. The one or more non-transitory computer-readable storage media according to claim 10, the operations further comprising:
receiving a second test graph associated with an anonymous task ID;
selecting a second group of sample graphs from the first CGD and the set of CGDs, based on a set of historical task IDs associated with the incoming graph learning tasks;
generating a third set of node embeddings based on the primary GNN model and the second test graph;
generating a fourth set of node embeddings based on the primary GNN model and the second group of sample graphs;
comparing the third set of node embeddings and the fourth set of node embeddings;
determining a set of similar graphs, from the second group of sample graphs, based on the comparison;
determining a set of labels associated with the determined set of similar graphs, the set of similar graphs including a first similar graph with first embeddings and a second similar graph with second embeddings, a similarity score between the first embeddings and the second embeddings being higher than a predetermined threshold;
determining a set of labels associated with the set of similar graphs;
determining a second task-specific prediction for the second test graph, based on a majority voting of the determined set of labels; and
controlling rendering of fourth information including the second task-specific prediction,
optionally wherein the second task-specific prediction corresponds to at least one of a domain-incremental inference or a class-incremental inference, associated with the primary GNN model.

15. An electronic device, comprising:
a memory configured to store instructions; and
a processor, coupled to the memory, configured to execute the instructions to perform a process comprising:
receiving a first graph associated with a first task following incoming graph learning tasks including a sequence of second graphs;
selecting a set of sample graphs from a set of condensed graph distributions (CGDs) associated with the incoming graph learning tasks;
updating a set of statistics associated with the set of CGDs, based on one or more auxiliary graph neural network (GNN) models, the first graph, and the set of sample graphs;
learning a first CGD associated with the first task, based on the update of the set of statistics;
re-selecting a plurality of sample graphs from the first CGD and the set of CGDs;
determining a first loss based on the first graph, the plurality of sample graphs, and a primary GNN model, the first loss corresponding to a prediction error associated with a downstream prediction task of the primary GNN model, the primary GNN model being configured to generate a prediction result for the downstream prediction task, based on the first loss; and
controlling rendering of first information including the prediction result associated with the downstream prediction task, based on the primary GNN model.
